# EUROPEAN PATENT SPECIFICATION

(11) **EP 3 592 014 B1**
(45) Date of publication and mention of the grant of the patent: **03.03.2021**
(21) Application number: 17902725.5
(22) Date of filing: 31.03.2017
(51) Int. Cl.: H04W 8/20, H04W 12/00, H04W 12/06, H04W 8/18

(54) **METHOD AND DEVICE FOR ADDING AUTHENTICATION ALGORITHM PROGRAM**
VERFAHREN UND VORRICHTUNG ZUM HINZUFÜGEN EINES AUTHENTIFIZIERUNGSALGORITHMUSPROGRAMMS
PROCÉDÉ ET DISPOSITIF OUR AJOUTER UN PROGRAMME D'ALGORITHME D'AUTHENTIFICATION

(43) Date of publication of application: 08.01.2020
(73) Proprietor: Huawei Technologies Co., Ltd., Longgang District Shenzhen, Guangdong 518129 (CN)
(72) Inventor: YU, Xiaobo, Shenzhen Guangdong 518129 (CN); LONG, Shuiping, Shenzhen Guangdong 518129 (CN); GAO, Linyi, Shenzhen Guangdong 518129 (CN)
(74) Representative: Thun, Clemens
(86) International application number: PCT/CN2017/079139
(87) International publication number: WO 2018/176430

(56) References cited:
- WO-A1-2017/041306
- CN-A- 103 781 054
- CN-A- 104 703 170
- CN-A- 105 282 732
- CN-A- 106 537 961
- US-A1- 2015 087 269
- GSMA: "RSP Architecture, SGP.21", , 23 August 2016 (2016-08-23), XP055404424, Retrieved from the Internet: URL:https://www.gsma.com/rsp/wp-content/up loads/docs_1/SGP.21_v2.0-Architecture.pdf [retrieved on 2017-09-06]

## Description

### TECHNICAL FIELD

The present invention relates to the field of terminal technologies, and in particular, to a method for adding an authentication algorithm program, and a relevant device.

### BACKGROUND

An embedded universal integrated circuit card (embedded Universal Integrated Circuit Card, eUICC), also referred to as an embedded subscriber identity module (embedded Subscriber Identity Module, eSIM), may be inserted, or soldered, or disposed in another manner into a user terminal (such as a mobile phone or a tablet computer).

In actual application, after downloading and installing a profile (profile) provided by a mobile network operator, the eUICC can activate the profile, thereby accessing the operator's network (such as a 2G, 3G, or 4G network).

The profile is a set of data and applications of the operator, and generally includes network access application parameters, such as a key parameter Ki, an international mobile subscriber identity (International Mobile Subscriber Identity, IMSI), a mobile network operator-security domain (Mobile Network Operator-Security Domain, MNO-SD), a supplementary security domain (Supplementary Security Domains, SSD), a controlling authority security domain (Controlling Authority Security Domain, CASD), applications (such as an NFC application), a JAVA card app, other elements in a file system, and profile metadata, where the profile metadata includes profile policy rules (Profile Policy Rules). A correspondence between the IMSI and the Ki is used to identify a user who requests network authentication.

Before the eUICC successfully accesses the operator's network using the profile, network authentication is further required. Network authentication is a process of verifying an identity of a network entity or an eUICC. An authentication algorithm program needs to be used in the network authentication process. For example, the authentication algorithm program may be a piece of code for implementing an authentication algorithm or data for describing the authentication algorithm. The authentication algorithm program may be used to generate an authentication response (SRES) and infer a cipher key (Cipher Key, CK) and an integrity key (Integrity Key, IK).

Further, prior art document GSMA, 23. August 2016, 21_v2.0-Architecture.pdf refers to an RSP architecture, SGP.21.

Further, US 2015/0087269 A1 refers to a method of providing mobile communication provider information and a device for performing the same. A terminal having an embedded universal integrated circuit card (eUICC) receives data in which the mobile communication provider information is encapsulated and stores the received data in the eUICC. However, in practice, because the eUICC may lack a required authentication algorithm program corresponding to an authentication algorithm, the eUICC cannot successfully register the profile into the network. Therefore, it is currently urgent to resolve a problem about how to add the authentication algorithm program lacking in the eUICC and corresponding to the authentication algorithm into the eUICC.

### SUMMARY

Embodiments of the present invention disclose a method for adding an authentication algorithm program, a relevant device and system, to add an authentication algorithm program lacking in an eUICC and corresponding to an authentication algorithm into the eUICC. This problem is solved by the subject matter of the independent claims. Further implemenation fomrs are provided in the dependent claims.

According to a first aspect, a method for adding an authentication algorithm program is further provided, including: receiving, by an embedded universal integrated circuit card eUICC, a bound profile package sent by a local profile assistant LPA, where the bound profile package includes initial secure channel information, storage metadata, an authentication algorithm program, and a profile, the authentication algorithm program corresponds to target information, and the target information is at least one of: firmware version information of the eUICC, an embedded universal integrated circuit card identifier EID issuer identifier of the eUICC, platform/operating system version information of the eUICC, or capability information of the eUICC; and adding, by the eUICC, the authentication algorithm program into the eUICC. Optionally, the authentication algorithm program may exist outside the profile or within the profile.

By implementing the authentication algorithm program described in the first aspect, the eUICC receives the bound profile package that includes the profile and the authentication algorithm program lacking in the eUICC. Therefore, when running the profile, the eUICC can use the authentication algorithm program received together with the profile to perform identity validity verification on the eUICC. Therefore, by using the authentication algorithm program described in the first aspect, the eUICC can add the authentication algorithm program into the eUICC in time.

In an optional implementation, before receiving the initial secure channel information sent by the LPA, the eUICC may further perform the following steps: The eUICC receives fourth information sent by the SM-DP+ server by using the LPA, where the fourth information includes the identifier of the authentication algorithm program, the length information of the authentication algorithm program, and a first digital signature; the eUICC verifies the first digital signature by using the identifier of the authentication algorithm program and the length information of the authentication algorithm program; if the eUICC succeeds in verifying the first digital signature, the eUICC generates a second digital signature by using the first digital signature; and the eUICC sends the second digital signature to the SM-DP+ server by using the LPA.

This implementation is applied, so that identity validity verification can be performed on the SM-DP+ server and the eUICC, and the eUICC can also obtain the identifier of the authentication algorithm program.

In an optional implementation, after receiving the authentication algorithm program sent by the LPA, the eUICC may further add the identifier of the authentication algorithm program into the eUICC.

In an optional implementation, the storage metadata includes the identifier of the authentication algorithm program, and the eUICC may further add the identifier of the authentication algorithm program into the eUICC.

In an optional implementation, the initial secure channel information of the bound profile package includes a remote operation type identifier whose value is install-bound-patch and ProfileType, where the install-bound-patch and the ProfileType are used to indicate that the bound profile package includes the authentication algorithm program and a profile. Optionally, the install-bound-patch and the ProfileType may also be used to indicate a security level of the authentication algorithm program and the profile. After receiving the initial secure channel information sent by the LPA, the eUICC verifies the remote operation type identifier whose value is install-bound-patch and ProfileType and that is included in the initial secure channel information. If it is verified that the remote operation type identifier is one of defined types, the eUICC processes the authentication algorithm program and the profile in the bound profile package separately by using a security level corresponding to the remote operation type. For example, the remote operation type identifier whose value is install-bound-patch and ProfileType indicates that the security level of the profile and the authentication algorithm program is integrity protection and encryption protection (Message Authentication Code and ENCRYPTION).

In an optional implementation, the authentication algorithm program and the profile are encrypted by using a session key. After receiving the authentication algorithm program sent by the LPA, the eUICC may further decrypt the authentication algorithm program by using the session key. Optionally, after completing the operation of adding the authentication algorithm program to the eUICC, the eUICC sends a message of successful adding of the authentication algorithm program to the LPA. The message of successful adding of the authentication algorithm program may be carried in a response application protocol data unit (response APDU) command, and the message of successful adding of the authentication algorithm program is used to instruct the LPA to send a profile part in the bound profile package to the eUICC. After receiving the profile sent by the LPA, the eUICC may further decrypt the profile by using the session key.

The eUICC may first receive the profile sent by the LPA, and then the eUICC decrypts the profile by using the session key, and installs the profile. Optionally, after completing the operation of installing the profile, the eUICC sends a profile installation success message to the LPA. The profile installation success message may be carried in a response application protocol data unit (response APDU) command, and the profile installation success message is used to instruct the LPA to send the authentication algorithm program in the bound profile package to the eUICC. The eUICC receives the authentication algorithm program sent by the LPA, and the eUICC decrypts the authentication algorithm program by using the session key. Upon completion of the decryption, the eUICC adds the authentication algorithm program into the eUICC. That is, the eUICC may first receive the authentication algorithm program sent by the LPA, and then receive the profile sent by the LPA; or the eUICC may first receive the profile sent by the LPA, and then receive the authentication algorithm program sent by the LPA. This is not limited in this embodiment of the present invention.

Security of data transmission can be improved by encrypting the authentication algorithm program and the profile by using the session key. Correspondingly, the eUICC needs to decrypt the authentication algorithm program and the profile by using the session key.

In an optional implementation, the authentication algorithm program and the profile are encrypted by using a key encrypting key, the bound profile package further includes the key encrypting key, and the key encrypting key is encrypted by using a session key. Before receiving the authentication algorithm program sent by the LPA, the eUICC may further receive the key encrypting key sent by the LPA, and decrypt the key encrypting key by using the session key. After receiving the authentication algorithm program sent by the LPA, the eUICC may further decrypt the authentication algorithm program by using the key encrypting key. Optionally, after completing the operation of adding or installing the authentication algorithm program, the eUICC sends a message of successful adding of the authentication algorithm program to the LPA. The message of successful adding of the authentication algorithm program may be carried in a response application protocol data unit (response APDU) command, and the message of successful adding of the authentication algorithm program is used to instruct the LPA to send a profile part in the bound profile package to the eUICC. After receiving the profile sent by the LPA, the eUICC may further decrypt the profile by using the key encrypting key.

The eUICC may first receive the profile sent by the LPA, and then the eUICC decrypts the profile by using the key encrypting key, and installs the profile. Optionally, after completing the operation of installing the profile, the eUICC sends a profile installation success message to the LPA. The profile installation success message may be carried in a response application protocol data unit (response APDU) command, and the profile installation success message is used to instruct the LPA to send the authentication algorithm program in the bound profile package to the eUICC. The eUICC receives the authentication algorithm program sent by the LPA, and the eUICC decrypts the authentication algorithm program by using the key encrypting key. Upon completion of the decryption, the eUICC adds the authentication algorithm program into the eUICC. That is, the eUICC may first receive the authentication algorithm program sent by the LPA, and then receive the profile sent by the LPA; or the eUICC may first receive the profile sent by the LPA, and then receive the authentication algorithm program sent by the LPA. This is not limited in this embodiment of the present invention.

In an optional implementation, the authentication algorithm program is encrypted by using the session key, the profile is encrypted by using the key encrypting key, the bound profile package further includes the key encrypting key, and the key encrypting key is encrypted by using the session key. Before receiving the profile sent by the LPA, the eUICC may further receive the key encrypting key sent by the LPA, and decrypt the key encrypting key by using the session key. After receiving the authentication algorithm program sent by the LPA, the eUICC may further decrypt the authentication algorithm program by using the session key. Optionally, after completing the operation of adding or installing the authentication algorithm program, the eUICC sends a message of successful adding of the authentication algorithm program to the LPA. The message of successful adding of the authentication algorithm program may be carried in a response application protocol data unit (response APDU) command, and the message of successful adding of the authentication algorithm program is used to instruct the LPA to send a profile part in the bound profile package to the eUICC. After receiving the profile sent by the LPA, the eUICC may further decrypt the profile by using the key encrypting key.

The eUICC may first receive the profile sent by the LPA, and then the eUICC decrypts the profile by using the key encrypting key, and installs the profile. Optionally, after completing the operation of installing the profile, the eUICC sends a profile installation success message to the LPA. The profile installation success message may be carried in a response application protocol data unit (response APDU) command, and the profile installation success message is used to instruct the LPA to send the authentication algorithm program in the bound profile package to the eUICC. The eUICC receives the authentication algorithm program sent by the LPA, and the eUICC decrypts the authentication algorithm program by using the session key. Upon completion of the decryption, the eUICC adds the authentication algorithm program into the eUICC. That is, the eUICC may first receive the authentication algorithm program sent by the LPA, and then receive the profile sent by the LPA; or the eUICC may first receive the profile sent by the LPA, and then receive the authentication algorithm program sent by the LPA. After receiving the authentication algorithm program sent by the LPA, the eUICC may receive the key encrypting key sent by the LPA, and after receiving the key encrypting key, the eUICC receives the profile sent by the LPA; or, after receiving the key encrypting key sent by the LPA, the eUICC receives the profile sent by the LPA, and after receiving the profile, the eUICC receives the authentication algorithm program sent by the LPA; or, after receiving the key encrypting key sent by the LPA, the eUICC may receive the authentication algorithm program sent by the LPA, and after receiving the authentication algorithm program, the eUICC receives the profile sent by the LPA This is not limited in this embodiment of the present invention.

The authentication algorithm program is encrypted by using the session key and the profile is encrypted by using the key encrypting key to improve security of data transmission. Correspondingly, the eUICC needs to decrypt the authentication algorithm program by using the session key, and decrypt the profile by using the key encrypting key.

In an optional implementation, the authentication algorithm program is encrypted by an MNO by using a public key of the eUICC, and the eUICC may decrypt the authentication algorithm program by using a private key of the eUICC.

Security of data transmission can be improved by encrypting the authentication algorithm program by using the public key of the eUICC. Correspondingly, the eUICC needs to decrypt the authentication algorithm program by using the private key of the eUICC.

In an optional implementation, the eUICC deletes the authentication algorithm program if the eUICC deletes the profile.

If the authentication algorithm program is implemented by a private authentication algorithm of an operator, and if the profile corresponding to the authentication algorithm program is deleted, then the authentication algorithm program corresponding to the profile has no opportunity of being invoked temporarily. Therefore, if the eUICC deletes the profile, the eUICC deletes the authentication algorithm program corresponding to the profile. This is beneficial to saving storage space. Specifically, the eUICC may create a mapping relationship between the authentication algorithm program and the profile after determining that the added or installed authentication algorithm program and the profile are in one bound profile package. After determining that the profile is deleted, the eUICC may delete the corresponding authentication algorithm program based on the previously created mapping relationship.

In an optional implementation, after adding the authentication algorithm program into the eUICC, the eUICC may perform the following steps: The eUICC receives a profile activation command sent by the LPA, where the profile activation command instructs the eUICC to activate the profile; the eUICC determines a corresponding authentication algorithm program based on the identifier of the authentication algorithm program in the profile; and the eUICC configures the authentication algorithm program by using a network access application parameter of the profile. The eUICC performs mutual authentication with a network by using the authentication algorithm program.

Optionally, the profile activation command includes an identifier of the profile in the previously downloaded bound profile package. The eUICC determines the corresponding authentication algorithm program by reading the identifier of the authentication algorithm program in the profile. The identifier of the authentication algorithm program may be stored in a file system part in the profile. The authentication algorithm program is an authentication algorithm program included in the previously downloaded bound profile package. The eUICC obtains the authentication algorithm program in the bound profile package, and installs or adds the authentication algorithm program into an authentication algorithm program set in a telecom framework. There may be a plurality of authentication algorithm programs in the eUICC, and each authentication algorithm program corresponds to a unique identifier of authentication algorithm program. Therefore, the eUICC determines the previously added authentication algorithm program based on the identifier of the authentication algorithm program in the profile. After determining the authentication algorithm program, the eUICC configures the authentication algorithm program by using a network access application parameter of the profile. After configuring the network application parameter, the eUICC performs mutual authentication with a network by using the authentication algorithm program. After the authentication succeeds, a terminal to which the eUICC belongs can access the network. The network here may be a network-side mobility management entity (Mobility Management Entity) or an authentication center.

This implementation is applied, so that when registration is performed by running the profile, an authentication algorithm program located in the bound profile package inclusive of the profile can be directly used to perform identity validity verification on a network entity.

In an optional implementation, the receiving, by the eUICC, the bound profile package sent by the LPA may include: The eUICC receives initial secure channel information in the bound profile package sent by the LPA; the eUICC receives storage metadata in the bound profile package sent by the LPA; the eUICC receives the authentication algorithm program in the bound profile package sent by the LPA; the eUICC sends a message to the LPA to indicate completion of adding the authentication algorithm program; and the eUICC receives the profile in the bound profile package sent by the LPA.

Optionally, after the eUICC receives the initial secure channel information and the storage metadata, the eUICC may first receive the profile in the bound profile package sent by the LPA; the eUICC sends the message to the LPA to indicate completion of adding the profile; and the eUICC receives the authentication algorithm program in the bound profile package sent by the LPA.

Specifically, the eUICC may receive, through an ES10d interface between LPA services in an ISD-R and an LPADd in the LPA, the authentication algorithm program sent by the LPA. Through the ES10d interface, the eUICC sends a message to the LPA to indicate completion of adding or installing the authentication algorithm program, where the message for indicating completion of adding the authentication algorithm program may be carried in a response application protocol data unit (response APDU) command. After sending the message used to indicate completion of adding the authentication algorithm program to the LPA, the eUICC receives the profile in the bound profile package sent by the LPA through an ES10b interface between an LPDd and the LPA services. Optionally, the eUICC may receive the profile sent by the LPA through the ES10b interface, and after receiving the profile, receive the authentication algorithm program sent by the LPA through the ES10d interface.

According to a second aspect, an eUICC is further provided, where the eUICC has functions of the eUICC described in the first aspect or in a possible implementation of the first aspect. The functions can be implemented by hardware or by corresponding software executed by hardware. The hardware or software includes one or more units corresponding to the functions. The units may be software and/or hardware. Based on the same inventive concept, a principle and a beneficial effect of the eUICC for resolving problems can be learned by referring to that of the first aspect and each possible implementation of the first aspect and the beneficial effect thereof, and therefore, the implementation of the eUICC can be learned by referring to the first aspect and each possible implementation of the first aspect, and is not repeated herein again.

### DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention.
FIG. 1 is a schematic diagram of a system architecture according to an embodiment of the present invention;
FIG. 2 is a software architectural diagram of an eUICC according to an embodiment of the present invention;
FIG. 3 to FIG. 5 are schematic flowcharts of a method for adding an authentication algorithm program according to an embodiment of the present invention;
FIG. 6 to FIG. 10 are schematic flowcharts of sending a bound profile package from an LPA to an eUICC according to an embodiment of the present invention;
FIG. 11 to FIG. 13 are schematic flowcharts of a method for adding an authentication algorithm program according to an embodiment of the present invention;
FIG. 14 is a schematic structural diagram of a bound profile package according to an embodiment of the present invention;
FIG. 15 is a schematic flowchart of another method for adding an authentication algorithm program according to an embodiment of the present invention;
FIG. 16 is a schematic structural diagram of another bound profile package according to an embodiment of the present invention;
FIG. 17 is a schematic flowchart of still another method for adding an authentication algorithm program according to an embodiment of the present invention;
FIG. 18 is a schematic structural diagram of still another bound profile package according to an embodiment of the present invention;
FIG. 19 is a schematic structural diagram of an SM-DP+ server according to an embodiment of the present invention;
FIG. 20 is a schematic structural diagram of an eUICC according to an embodiment of the present invention;
FIG. 21 is a schematic structural diagram of a user terminal according to an embodiment of the present invention;
FIG. 22 is a schematic structural diagram of another SM-DP+ server according to an embodiment of the present invention;
FIG. 23 is a schematic structural diagram of still another eUICC according to an embodiment of the present invention;
FIG. 24 is a schematic structural diagram of an LPA according to an embodiment of the present invention; and
FIG. 25 is a schematic structural diagram of another user terminal according to an embodiment of the present invention.

### DESCRIPTION OF EMBODIMENTS

To make the objectives, technical solutions, and advantages of the present invention clearer, the following describes the technical solutions of the embodiments of the present invention with reference to the accompanying drawings.

For ease of understanding the embodiments of the present invention, the following first describes a system architecture and an eUICC software architecture provided in the embodiments of the present invention.

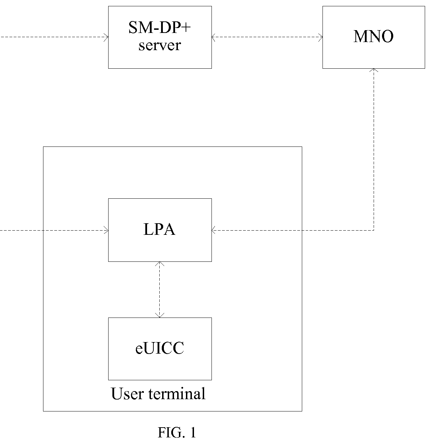

FIG. 1 is a system architectural diagram according to an embodiment of the present invention. As shown in FIG. 1, the system architecture includes a user terminal, an SM-DP+ server, and a mobile network operator (Mobile Network Operator (MNO).

The user terminal may include various electronic devices such as a mobile phone, a tablet, a personal digital assistant (Personal Digital Assistant, PDA), a television set, an in-vehicle device, a machine to machine device (Machine to Machine, M2M), a mobile Internet device (Mobile Internet Device, MID), and a smart wearable device (such as a smart watch or a smart band). An eUICC and a local profile assistant (Local Profile Assistant, LPA) are provided in the user terminal. The LPA may be deployed in the terminal independently of the eUICC, or deployed in the eUICC. FIG. 1 shows an example in which the LPA and the eUICC are deployed independently.

Optionally, the LPA may include a local profile download (Local Profile Download, LPD) module, a local user interface (Local User Interface, LUI) module, and a local discovery service (Local Discovery Service, LDS) module. Generally, the LPA plays a role of interaction between the user terminal and the eUICC in the user terminal. The LPD module is mainly responsible for downloading a subscription file, the LDS module is mainly responsible for service discovery, and the LUI module provides a UI interface for a user. The user may manage a profile downloaded onto the eUICC by using the LPA, for example, performing operations such as activation, deactivation, and deletion on the profile.

The SM-DP+ server may generate a profile, associate the profile with a specified eUICC, and download the profile to the eUICC.

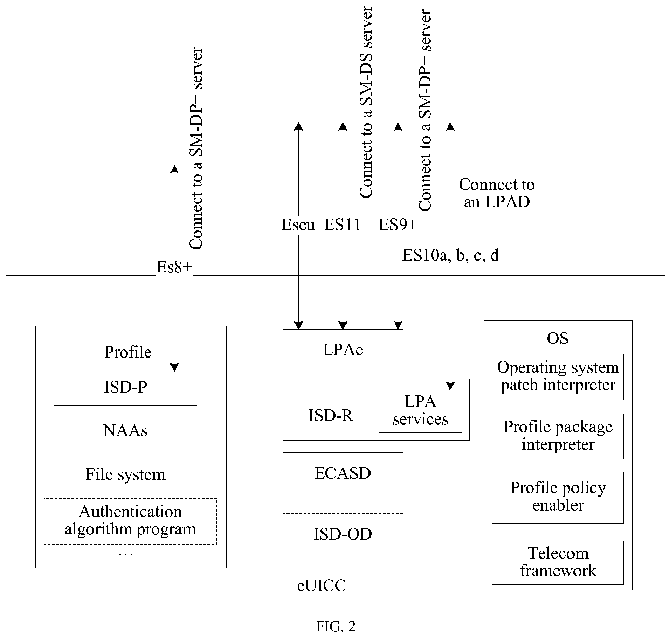

FIG. 2 is a software architectural diagram of an eUICC according to an embodiment of the present invention. As shown in FIG. 2, the eUICC includes a profile, an LPAe (LPA in eUICC, LPA in the eUICC), issuer security domain root (Issuer Security Domain Root, ISD-R), and an eUICC controlling authority security domain (eUICC Controlling Authority Security Domain, ECASD). Optionally, the eUICC may further include an issuer security domain OS update (Issuer Security Domain OS update, ISD-OD), and an operating system (Operating System, OS) part. The LPAe, the ISD-R, the ECASD, and the ISD-OD may also be included in the operating system part. The ISD-R includes LPA services (LPA Services). The profile includes an issuer security domain profile (Issuer Security Domain Profile, ISD-P) part, NAAs (Network Access Applications, network access application), a file system, and the like. Optionally, the profile may further include an authentication algorithm program. Optionally, when the profile includes an authentication algorithm program, the eUICC may include no ISD-OD. An OS part includes an operating system patch interpreter (OS patch interpreter), a profile policy enabler (profile policy enabler), a profile package interpreter (Profile Package Interpreter), and a telecom framework (Telecom Framework), where the telecom framework includes the authentication algorithm program.

As shown in FIG. 2, an LPA service in the ISD-R is interfaced with an LPAd (LPA in the device, LPA in the device) through four interfaces, namely, ES10a, ES10b, ES10c, and ES10d. ES10a is used to handle profile discovery between an LDSd (Local Discovery Service in the device, local discovery service in the device) and the LPA service. The ES10b is used to transmit a bound profile package between the LPDd (Local Profile Download in the device, local profile download in the device) and the LPA services to the eUICC. ES10c is used to manage local profiles of users between an LUId (Local User Interface in the device, local user interface in the device) and the LPA service. The ES10d is used to transmit an operating system update package between an LPADd (Local Patch Download in the device, local patch download in the device) and the LPA service in the LPA to the eUICC, and buffer the update package into the ISD-OD. The operating system patch interpreter in an operating system is used to interpret an operating system patch package into an installed operating system patch file based on an operating system patch package specification. The operating system patch interpreter may also be used to buffer an operating system update package received from the LPADd. The ES10d interface may have other names, and this is not limited in this embodiment.

The NAA includes an authentication parameter, a unique IMSI (subscription identifier), location data, and the like. The telecom framework includes the authentication algorithm program. Network authentication is required while the eUICC registers the profile into a network. In a process of network authentication, the authentication algorithm program needs to be used to generate an authentication response (SRES), and deduce a cipher key and an integrity key, to verify validity of a network entity or the eUICC. However, in practice, the eUICC may lack an authentication algorithm program corresponding to an authentication algorithm that needs to be used, and therefore, cannot successfully access an operator network by using the profile.

To add an authentication algorithm program lacking in the eUICC and corresponding to an authentication algorithm into the eUICC, embodiments of the present invention provide a method for adding an authentication algorithm program, and a relevant device and system.

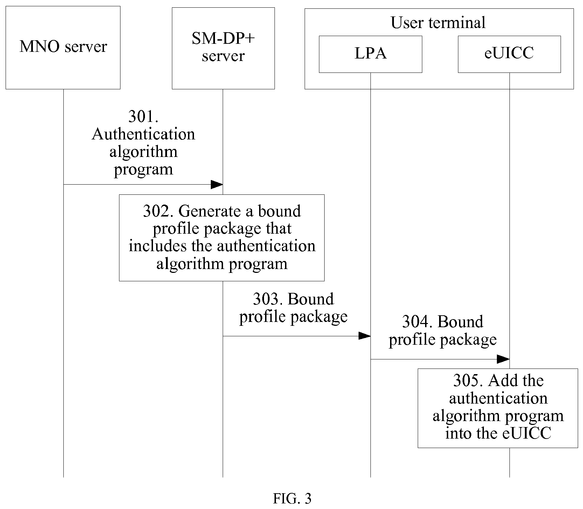

FIG. 3 is a schematic flowchart of a method for adding an authentication algorithm program according to an embodiment of the present invention. As shown in FIG. 3, the method for adding an authentication algorithm program may include steps 301 to 305:
301. An MNO sends an authentication algorithm program to an SM-DP+ server.

The authentication algorithm program corresponds to target information, and the target information is at least one of: firmware version information of the eUICC, an EID (eUICC-ID, embedded universal integrated circuit card identifier) issuer identifier of the eUICC, platform/operating system version information of the eUICC, or capability information of the eUICC.

Optionally, the authentication algorithm program is used to be added into an authentication algorithm program set of the eUICC. Optionally, the authentication algorithm program set may be located in a telecom framework of the eUICC.

Optionally, the MNO may generate authentication algorithm programs of different versions based on at least one of different firmware version information, EID issuer identifier, platform/operating system version information, and capability information of the eUICC, and create a list (where an example structure is shown in Table 1). The list includes identifiers of the authentication algorithm programs of different versions (or the versions of the authentication algorithm programs), the corresponding firmware version information, the EID issuer identifier, the platform/operating system version information, and the capability information of the eUICC. Optionally, the list may be created by a card vendor. For example, an operator and the card vendor negotiate an authentication algorithm that needs to be implemented, and an environment or condition for running the authentication algorithm (for example, the firmware version information of the eUICC, the EID issuer identifier, the platform/operating system version information of the eUICC, the capability information of the eUICC, or one or more thereof), the operator lets the card vendor implement the authentication algorithm, and after completing development, the card vendor delivers a list of authentication algorithm programs of all versions and all corresponding authentication algorithm programs in the list to the operator. Alternatively, the card vendor may store the list of authentication algorithm programs of all versions and all corresponding authentication algorithm programs in the list into a patch server, and create an interface between the patch server and an operator server, and the MNO may request an authentication algorithm program corresponding to the target information from the patch server.

**Table 1**

| Identifier of the authentication algorithm program | EID issuer identifier | Firmware version information | Platform/operating system version information | Capability information of the eUICC |
|---|---|---|---|---|
| GD_01 | G&D | 852321 | V4.0.1 | Capability information 1 |
| GTO_01 | Gemalto | 853514 | V5.5.1 | Capability information 2 |

For example, if an eUICC1 exists and the eUICC1 lacks the authentication algorithm program supported by the MNO, the EID issuer identifier of the eUICC1 is G&D, the firmware version information is 852321, the platform/operating system version information is V4.0.1, and the capability information of the eUICC is capability information 1, then the MNO searches the list based on the EID issuer identifier of the eUICC1, the firmware version information, the platform/operating system version information, and the capability information of the eUICC, and finds that an identifier of the corresponding authentication algorithm program is GD_01; and the MNO sends the authentication algorithm program of the GD_01 version to the SM-DP+ server. The SM-DP+ server generates a bound profile package that includes the authentication algorithm program of the GD_01 version, and sends the bound profile package to the eUICC 1 by using the LPA. Then the eUICC 1 adds the authentication algorithm program of the GD_01 version into the eUICC1. The correspondence in the above table is only an example. Optionally, the identifier of the authentication algorithm program may also correspond to one or any combination of information entries in the table. For example, the identifier of the authentication algorithm program may correspond to only the EID issuer identifier, or the identifier of the authentication algorithm program may correspond to both the EID issuer identifier and the firmware version information. This is not limited in this embodiment of this application.

302. The SM-DP+ server generates a bound profile package that includes the authentication algorithm program.

In this embodiment of the present invention, after receiving the authentication algorithm program sent by the MNO, the SM-DP+ server generates the bound profile package that includes the authentication algorithm program. Optionally, the bound profile package further includes a profile. That is, the authentication algorithm program lacking in the eUICC may be downloaded in a process of downloading the profile. Therefore, when the bound profile package further includes the profile, the authentication algorithm program can be downloaded to the eUICC in a more timely manner. Optionally, the authentication algorithm program may be located in the profile, or the authentication algorithm program may be located outside the profile. This is not limited in this embodiment of the present invention.

303. The SM-DP+ server sends the bound profile package to an LPA.

In this embodiment of the present invention, after the SM-DP+ server generates the bound profile package that includes the authentication algorithm program, the SM-DP+ server sends the bound profile package to the LPA, so that the bound profile package can be sent to the eUICC by using the LPA.

304. The LPA sends the bound profile package to an eUICC.

305. The eUICC adds the authentication algorithm program into the eUICC.

In this embodiment of the present invention, the authentication algorithm program is used to be added into the eUICC. That is, after receiving the authentication algorithm program, the eUICC adds the authentication algorithm program into the eUICC. Specifically, the authentication algorithm program may be added into an authentication algorithm program set of the eUICC, where the authentication algorithm program set may be implemented in a telecom framework (Telecom Framework).

By implementing the authentication algorithm program described in FIG. 3, the MNO can send the authentication algorithm program lacking in the eUICC and corresponding to the authentication algorithm to the SM-DP+ server. After receiving the authentication algorithm program sent by the MNO, the SM-DP+ server can generate a bound profile package that includes the authentication algorithm program, and send the bound profile package to the eUICC by using the LPA. Therefore, the eUICC can add the authentication algorithm program in the bound profile package into the eUICC. As can be learned, by implementing the authentication algorithm program illustrated in FIG. 3, the eUICC can add the authentication algorithm program corresponding to the authentication algorithm into the eUICC in time.

In an optional implementation, for example, the target information includes the firmware version information of the eUICC, and in a subscription process between a user terminal and an MNO server, the MNO server may receive the firmware version information of the eUICC. After receiving the firmware version information of the eUICC, the MNO server finds the corresponding authentication algorithm program based on the received firmware version information of the eUICC.

In another example, the target information includes the EID issuer identifier of the eUICC. In the subscription process between the user terminal and the MNO server, the MNO server may receive the EID sent by the LPA. After receiving the EID, the MNO server obtains the EID issuer identifier from the EID. The MNO finds the corresponding authentication algorithm program based on the EID issuer identifier.

In another example, the target information includes the platform/operating system version information. In the subscription process between the user terminal and the MNO server, the MNO server may receive the EID sent by the LPA. After receiving the EID, the MNO server obtains the platform/operating system version information from the EID. The MNO finds the corresponding authentication algorithm program based on the platform/operating system version information.

In another example, the target information includes the EID issuer identifier and the platform/operating system version information. In the subscription process between the user terminal and the MNO server, the MNO server may receive the EID sent by the LPA. After receiving the EID, the MNO server obtains the EID issuer identifier and the platform/operating system version information of the eUICC from the EID. The MNO finds the corresponding authentication algorithm program based on the EID issuer identifier and the platform/operating system version information.

In another example, the target information includes the capability information of the eUICC. In the subscription process between the user terminal and the MNO server, the MNO server may receive the capability information of the eUICC. After receiving the capability information of the eUICC, the MNO server finds the corresponding authentication algorithm program based on the received capability information of the eUICC.

In another example, the target information includes the firmware version information of the eUICC, the EID issuer identifier of the eUICC, and the platform/operating system version information of the eUICC. In the subscription process between the user terminal and the MNO, the MNO may receive the firmware version information and the EID sent by the LPA. After receiving the EID, the MNO obtains the EID issuer identifier and the platform/operating system version information from the EID, finds the corresponding authentication algorithm program based on the received firmware version information, EID issuer identifier, and platform/operating system version information, and sends the authentication algorithm program to the SM-DP+ server.

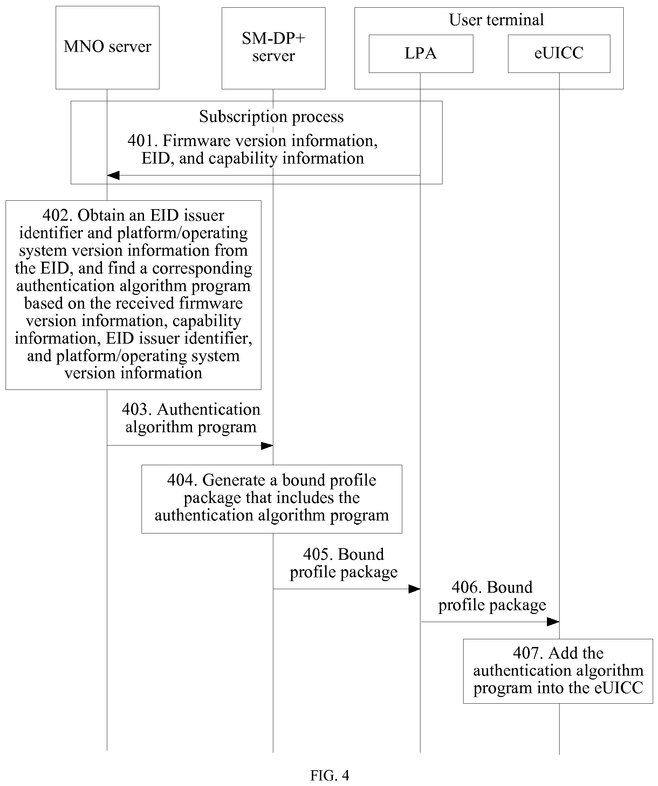

In another example, as shown in FIG. 4, the target information includes the firmware version information of the eUICC, the EID issuer identifier of the eUICC, the platform/operating system version information of the eUICC, and the capability information of the eUICC. In a subscription process between the user terminal and the MNO server, the MNO server may receive the firmware version information, the EID, and the capability information of the eUICC that are sent by the LPA. After receiving the EID, the MNO server obtains the EID issuer identifier and the platform/operating system version information from the EID, finds the corresponding authentication algorithm program based on the received firmware version information, EID issuer identifier, platform/operating system version information, and the capability information of the eUICC, and sends the authentication algorithm program to the SM-DP+ server. That is, the target information may include one or more of the EID issuer identifier, the platform/operating system version information, the firmware version information of the eUICC, or the capability information of the eUICC. After receiving the target information, the MNO server finds the corresponding authentication algorithm program based on the target information. Optionally, the MNO server may send the authentication algorithm program to the SM-DP+ server by using a DownloadOrder (DownloadOrder), or may send the authentication algorithm program to the SM-DP+ server by using a ConfirmOrder (ConfirmOrder).

By applying this implementation, the MNO can proactively push the authentication algorithm program lacking in the eUICC to the SM-DP+ server, and after receiving the authentication algorithm program, the SM-DP+ server can send the authentication algorithm program to the eUICC by using the LPA for adding.

Optionally, in the subscription process between the user terminal and the MNO server, after the EID or other matching information (such as the firmware version information and the capability information of the eUICC) is reported, the MNO server searches for the corresponding authentication algorithm program, and a DownloadOrder (DownloadOrder) sent to the SM-DP+ server carries a ProfileType message (ProfileType). The ProfileType message is used to indicate a type of a profile specifically generated or matched by the SM-DP+ server. The profile type can be identified and determined based on data included in the profile. For example, a ProfileType message 1 is used to indicate that the profile type is a profile including an authentication algorithm program, and a ProfileType message 2 is used to indicate that the profile type is a profile including no authentication algorithm program. Alternatively, the profile type may also be identified and determined based on each different authentication algorithm program identifier included in the profile. For example, the ProfileType message 1 indicates a profile type including an authentication algorithm program identifier GD_01, and the ProfileType message 2 indicates a profile type including an authentication algorithm program identifier GTO_01. Optionally, the MNO server may also add two ProfileType messages in the DownloadOrder, one ProfileType message is used to indicate that the profile type is a profile including an authentication algorithm program, and the other ProfileType message is used to indicate that the profile type is a profile including the authentication algorithm program identifier GTO_01. Alternatively, the MNO server may also add two ProfileType messages in the DownloadOrder, one ProfileType message is used to indicate that the profile type is a profile including no authentication algorithm program, and the other ProfileType message is used to indicate that the profile type is a profile including no authentication algorithm program identifier GTO_01.

Optionally, in the subscription process between the user terminal and the MNO server, the user terminal may report no EID information, but purchase an activation code (Activation code) corresponding to a profile. The MNO server may configure authentication algorithm programs of different versions into profiles of different sets when generating profiles of corresponding activation codes in batches. When the user terminal purchases the activation code, an operator may request the user terminal to provide matching information. The matching information may be at least one of the firmware version information of the eUICC, the EID issuer identifier of the eUICC, the platform/operating system version information of the eUICC, or the capability information of the eUICC. Based on the matching information obtained from the user terminal, the MNO server instructs the SM-DP+ server to package the profile including the authentication algorithm program of the corresponding version, and to send the package to the eUICC of the user terminal. The method for the SM-DP+ server to obtain the authentication algorithm program may be: After generating the authentication algorithm programs of different versions corresponding to authentication algorithms, the MNO server sends a list of needed authentication algorithm programs of different versions together with the authentication algorithm programs of all versions corresponding to the authentication algorithms to the SM-DP+ server.

In an optional implementation, for example, when the target information includes the firmware version information of the eUICC, the MNO, the SM-DP+ server, and the LPA may further perform the following steps: The LPA sends second information to the SM-DP+ server, where the second information includes eUICC information; after receiving the second information, the SM-DP+ server obtains the firmware version information from the eUICC information; the SM-DP+ server sends third information to the MNO, where the third information includes the firmware version information; and the MNO searches for a corresponding authentication algorithm program based on the third information. In this way, the MNO sends the found authentication algorithm program to the SM-DP+ server.

In another example, when the target information includes the EID issuer identifier of the eUICC, the MNO, the SM-DP+ server, and the LPA may further perform the following steps: The MNO sends first information to the SM-DP+ server, where the first information includes the EID information; after receiving the first information, the SM-DP+ server obtains the EID issuer identifier from the EID information; the SM-DP+ server sends third information to the MNO, where the third information includes the EID issuer identifier; and the MNO searches for a corresponding authentication algorithm program based on the third information. In this way, the MNO sends the found authentication algorithm program to the SM-DP+ server.

In another example, when the target information includes the platform/operating system version information of the eUICC, the MNO, the SM-DP+ server, and the LPA may further perform the following steps: The MNO sends first information to the SM-DP+ server, where the first information includes the EID information; after receiving the first information, the SM-DP+ server obtains the platform/operating system version information of the eUICC from the EID information; the SM-DP+ server sends third information to the MNO, where the third information includes the platform/operating system version information of the eUICC; and the MNO searches for a corresponding authentication algorithm program based on the third information. In this way, the MNO sends the found authentication algorithm program to the SM-DP+ server.

In another example, when the information includes the EID issuer identifier and the platform/operating system version information of the eUICC, the MNO, the SM-DP+ server, and the LPA may further perform the following steps: The MNO sends first information to the SM-DP+ server, where the first information includes the EID information; after receiving the first information, the SM-DP+ server obtains the EID issuer identifier and the platform/operating system version information of the eUICC from the EID information; the SM-DP+ server sends third information to the MNO, where the third information includes the EID issuer identifier and the platform/operating system version information of the eUICC; and the MNO searches for a corresponding authentication algorithm program based on the third information. In this way, the MNO sends the found authentication algorithm program to the SM-DP+ server.

For example, when the target information includes the capability information of the eUICC, the MNO, the SM-DP+ server, and the LPA may further perform the following steps: The LPA sends second information to the SM-DP+ server, where the second information includes the eUICC information; after receiving the second information, the SM-DP+ server obtains the capability information of the eUICC from the eUICC information; the SM-DP+ server sends third information to the MNO, where the third information includes the capability information of the eUICC; and the MNO searches for a corresponding authentication algorithm program based on the third information. In this way, the MNO sends the found authentication algorithm program to the SM-DP+ server.

In another example, when the target information includes the firmware version information of the eUICC, the EID issuer identifier of the eUICC, and the platform/operating system version information of the eUICC, the MNO, the SM-DP+ server, and the LPA may further perform the following steps: The MNO sends first information to the SM-DP+ server, where the first information includes the EID information; the LPA sends second information to the SM-DP+ server, where the second information includes the eUICC information; after receiving the first information and the second information, the SM-DP+ server obtains the firmware version information from the eUICC information, and obtains the EID issuer identifier and the platform/operating system version information from the EID information; the SM-DP+ server sends third information to the MNO, where the third information includes the firmware version information, the EID issuer identifier, and the platform/operating system version information; and the MNO searches for a corresponding authentication algorithm program based on the third information. In this way, the MNO sends the found authentication algorithm program to the SM-DP+ server.

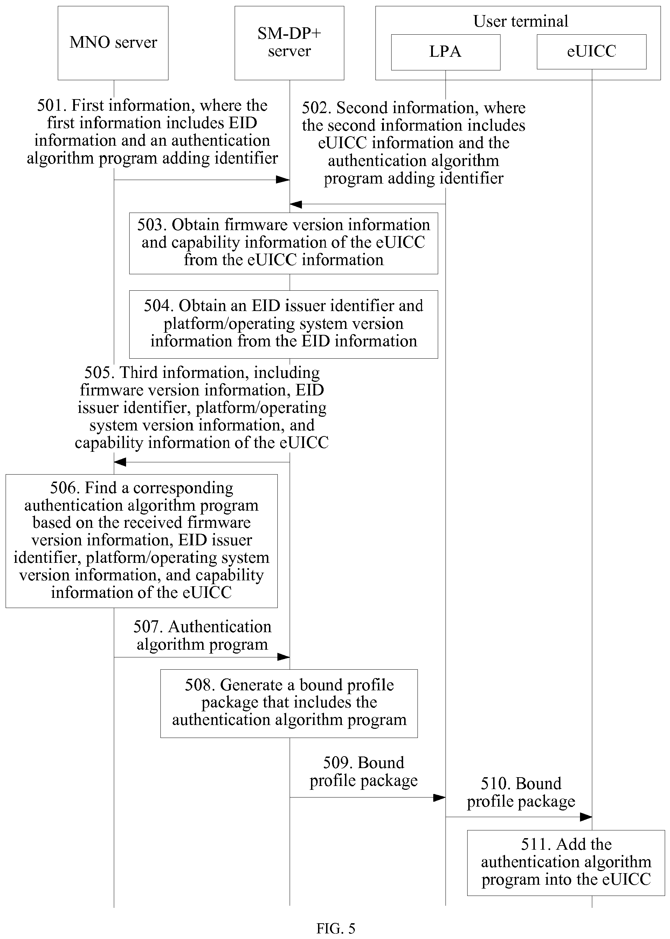

In another example, when the target information includes the firmware version information of the eUICC, the EID issuer identifier of the eUICC, the platform/operating system version information of the eUICC, and the capability information of the eUICC, as shown in FIG. 5, the MNO, the SM-DP+ server, and the LPA may further perform the following steps: The MNO sends first information to the SM-DP+ server, where the first information includes the EID information; the LPA sends second information to the SM-DP+ server, where the second information includes the eUICC information; after receiving the first information and the second information, the SM-DP+ server obtains the firmware version information and the capability information of the eUICC from the eUICC information, and obtains the EID issuer identifier and the platform/operating system version information from the EID information; the SM-DP+ server sends third information to the MNO, where the third information includes the firmware version information, the EID issuer identifier, the platform/operating system version information, and the capability information of the eUICC; and the MNO searches for a corresponding authentication algorithm program based on the third information. In this way, the MNO sends the found authentication algorithm program to the SM-DP+ server. That is, the third information sent by the SM-DP+ server to the MNO may include one or more of: the EID issuer identifier, the platform/operating system version information, the firmware version information of the eUICC, and the capability information of the eUICC, and the MNO searches for a corresponding authentication algorithm program based on the third information. In this way, the MNO sends the found authentication algorithm program to the SM-DP+ server.

Optionally, the first information may be a DownloadOrder (DownloadOrder) or a ConfirmOrder (ConfirmOrder). Optionally, the third information may be HandleDownloadProgressInfo.

By applying this implementation, the SM-DP+ server can proactively request the authentication algorithm program lacking in the eUICC from the MNO, and after receiving the authentication algorithm program, the SM-DP+ server can send the authentication algorithm program to the eUICC by using the LPA for adding.

Optionally, an operator and a card vendor negotiate an authentication algorithm that needs to be implemented, and an environment or condition for running the authentication algorithm (for example, the firmware version information of the eUICC, the EID issuer identifier, the platform/operating system version information of the eUICC, the capability information of the eUICC, or one or more thereof), the operator lets the card vendor implement the authentication algorithm, and after completing development, the card vendor delivers a list of authentication algorithm programs of all versions and all corresponding authentication algorithm programs in the list to the operator. Optionally, the card vendor may store the list of authentication algorithm programs of all versions and all corresponding authentication algorithm programs in the list into a patch server, and create an interface between the patch server and an operator server. When the SM-DP+ server sends the third information to the operator server by using HandleDownloadProgressInfo (HandleDownloadProgressInfo), the operator server may forward the third information to the patch server through the interface connected to the patch server. Based on the information (for example, the firmware version information of the eUICC, the EID issuer identifier, the platform/operating system version information of the eUICC, the capability information of the eUICC, or one or more thereof) received in the third information, the patch server finds a matched authentication algorithm program and sends the authentication algorithm program to the operator server. The operator server sends the received authentication algorithm program to the SM-DP+ server. Optionally, the SM-DP+ server may further receive the authentication algorithm program that is forwarded from the operator server and sent by the patch server and that matches the third information, and may receive an identifier of the authentication algorithm program.

In an optional implementation, the first information further includes an authentication algorithm program adding identifier, the authentication algorithm program adding identifier is used to instruct the SM-DP+ server to request the authentication algorithm program from the MNO after obtaining the target information. For example, if the target information includes the firmware version information, the authentication algorithm program adding identifier is used to instruct the SM-DP+ server to request the authentication algorithm program from the MNO after obtaining the firmware version information. If the target information includes the EID issuer identifier, the authentication algorithm program adding identifier is used to instruct the SM-DP+ server to request the authentication algorithm program from the MNO after obtaining the EID issuer identifier. If the target information includes the platform/operating system version information, the authentication algorithm program adding identifier is used to instruct the SM-DP+ server to request the authentication algorithm program from the MNO after obtaining the platform/operating system version information. If the target information includes the EID issuer identifier and the platform/operating system version information, the authentication algorithm program adding identifier is used to instruct the SM-DP+ server to request the authentication algorithm program from the MNO after obtaining the EID issuer identifier and the platform/operating system version information. If the target information includes the capability information of the eUICC, the authentication algorithm program adding identifier is used to instruct the SM-DP+ server to request the authentication algorithm program from the MNO after obtaining the capability information of the eUICC. As shown in FIG. 5, if the target information includes the firmware version information, the EID issuer identifier, the platform/operating system version information, and the capability information of the eUICC, the authentication algorithm program adding identifier is used to instruct the SM-DP+ server to request the authentication algorithm program from the MNO after obtaining the firmware version information, the EID issuer identifier, the platform/operating system version information, and the capability information of the eUICC. That is, the target information may include one or more of the EID issuer identifier, the platform/operating system version information, the firmware version information of the eUICC, or the capability information of the eUICC. The authentication algorithm program adding identifier is used to instruct the SM-DP+ server to request the authentication algorithm program from the MNO after obtaining all compositional information in the target information.

In an optional implementation, the second information further includes the authentication algorithm program adding identifier. After completion of the subscription process, the activation code allocated by the MNO is obtained, and the activation code includes the authentication algorithm program adding identifier and an address of the SM-DP+ server. After a user enters the activation code, the LPA identifies the authentication algorithm program adding identifier included in the activation code, and add the authentication algorithm program adding identifier in the second information sent to the SM-DP+ server. The authentication algorithm program adding identifier is used to instruct the SM-DP+ server to request the authentication algorithm program from the MNO after obtaining the target information. For example, if the target information includes the firmware version information, the authentication algorithm program adding identifier is used to instruct the SM-DP+ server to request the authentication algorithm program from the MNO after obtaining the firmware version information. If the target information includes the EID issuer identifier, the authentication algorithm program adding identifier is used to instruct the SM-DP+ server to request the authentication algorithm program from the MNO after obtaining the EID issuer identifier. If the target information includes the platform/operating system version information, the authentication algorithm program adding identifier is used to instruct the SM-DP+ server to request the authentication algorithm program from the MNO after obtaining the platform/operating system version information. If the target information includes the EID issuer identifier and the platform/operating system version information, the authentication algorithm program adding identifier is used to instruct the SM-DP+ server to request the authentication algorithm program from the MNO after obtaining the EID issuer identifier and the platform/operating system version information. If the target information includes the capability information of the eUICC, the authentication algorithm program adding identifier is used to instruct the SM-DP+ server to request the authentication algorithm program from the MNO after obtaining the capability information of the eUICC. As shown in FIG. 5, if the target information includes the firmware version information, the EID issuer identifier, the platform/operating system version information, and the capability information of the eUICC, the authentication algorithm program adding identifier is used to instruct the SM-DP+ server to request the authentication algorithm program from the MNO after obtaining the firmware version information, the EID issuer identifier, and the platform/operating system version information. In the solution, the MNO server may not add the authentication algorithm program adding identifier in the first information. After completion of the subscription process between the user terminal and the MNO server, the user terminal receives the activation code sent by the MNO server, where the activation code includes the authentication algorithm program adding identifier. After the user terminal LPA receives an activation code operation of the user, the LPA recognizes the activation code, adds the authentication algorithm program adding identifier that is in the activation code in the second information, and sends the second information to the SM-DP+ server. That is, the target information may include one or more of the EID issuer identifier, the platform/operating system version information, the firmware version information of the eUICC, or the capability information of the eUICC. The authentication algorithm program adding identifier is used to instruct the SM-DP+ server to request the authentication algorithm program from the MNO after obtaining all compositional information in the target information.

In an optional implementation, both the first information and the second information may include the authentication algorithm program adding identifier, or only one of the first information and the second information includes the authentication algorithm program adding identifier. This is not limited in this embodiment of the present invention.

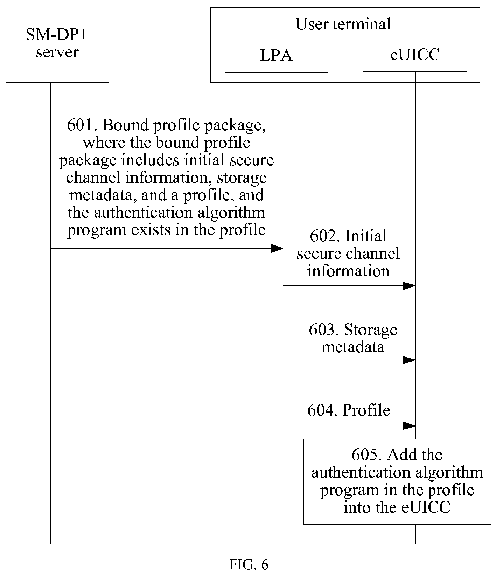

In an optional implementation, the bound profile package includes initial secure channel information, storage metadata, an authentication algorithm program, and a profile, and the authentication algorithm program exists in the profile. FIG. 6 is a flowchart of sending the bound profile package by the LPA to the eUICC. As shown in FIG. 6, a specific implementation of sending the bound profile package by the LPA to the eUICC may include the following steps: The LPA sends the initial secure channel information to the eUICC; the LPA sends the storage metadata to the eUICC; and the LPA sends the profile to the eUICC. Correspondingly, a specific implementation of receiving the bound profile package by the eUICC may include the following steps: The eUICC receives the initial secure channel information sent by the LPA; the eUICC receives the storage metadata sent by the LPA; and the eUICC receives the profile sent by the LPA.

Specifically, after receiving the profile that includes the authentication algorithm program, the eUICC parses the authentication algorithm program included in the profile based on a profile element (profile element) format defined by a subscriber identity module alliance (simalliance), and adds or installs the parsed authentication algorithm program into the eUICC. Specifically, the authentication algorithm program is added or installed into an authentication algorithm program set in the telecom framework. The addition or installation of the authentication algorithm program may occur before installation of other profile elements of the profile, or after the installation of other profile elements, or during installation of all profile elements. This is not limited in this embodiment of the present invention.

The authentication algorithm program in the profile is stored and the profile is downloaded to the eUICC, so that the authentication algorithm program lacking in the eUICC can be downloaded to the eUICC during the process of downloading the profile. After the profile is activated, the authentication algorithm program can be directly used to perform identity validity verification on the eUICC. Therefore, the authentication algorithm program in the profile is stored and the profile is downloaded to the eUICC, so that the authentication algorithm program can be downloaded to the eUICC in a more timely manner.

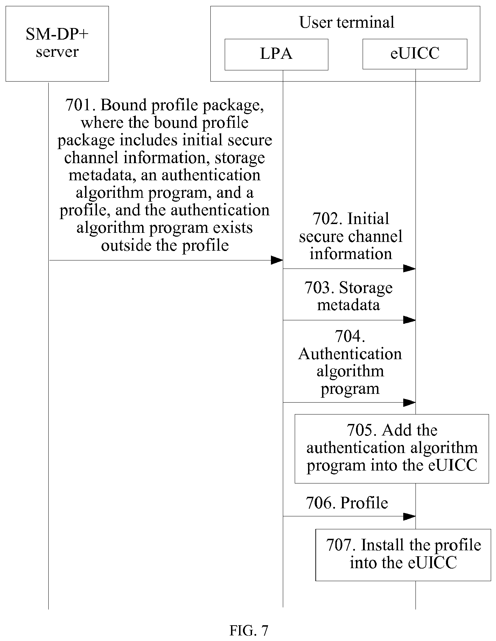

In an optional implementation, the bound profile package includes the initial secure channel information, storage metadata, an authentication algorithm program, and a profile, and the authentication algorithm program exists outside the profile, that is, the authentication algorithm program is not in the profile. FIG. 7 is a flowchart of sending the bound profile package by the LPA to the eUICC. As shown in FIG. 7, a specific implementation of sending the bound profile package by the LPA to the eUICC may include the following steps: The LPA sends the initial secure channel information to the eUICC; the LPA sends the storage metadata to the eUICC; the LPA sends the authentication algorithm program to the eUICC; and the LPA sends the profile to the eUICC.

Correspondingly, a specific implementation of receiving the bound profile package by the eUICC may include the following steps: The eUICC receives the initial secure channel information sent by the LPA; the eUICC receives the storage metadata sent by the LPA; the eUICC receives the authentication algorithm program sent by the LPA; and the eUICC receives the profile sent by the LPA.

Optionally, after receiving the storage metadata sent by the LPA, the eUICC may first receive the profile sent by the LPA. After completing the operation of installing the profile, the eUICC sends a message to the LPA to indicate completion of installing the profile. After sending the message used to indicate completion of installing the profile to the LPA, the eUICC may receive the authentication algorithm program sent by the LPA. Correspondingly, after sending the storage metadata to the eUICC, the LPA may first send the profile to the eUICC. After receiving the message sent by the eUICC to indicate completion of installing the profile, the LPA sends the authentication algorithm program to the eUICC. Optionally, if the LPA sends the authentication algorithm program to the eUICC after sending the profile, the LPA prompts a user, after receiving the message sent by the eUICC to indicate completion of adding the authentication algorithm program, whether to activate the downloaded profile. After a confirmation operation of the user is received, a profile activation command is sent to the eUICC, where the profile activation command instructs the eUICC to activate the profile.

Optionally, after receiving the storage metadata sent by the LPA, the eUICC may first receive the authentication algorithm program sent by the LPA. After completing the operation of adding the authentication algorithm program, the eUICC sends a message that is used to indicate completion of adding the authentication algorithm program. After sending the message used to indicate completion of adding the authentication algorithm program to the LPA, the eUICC may receive the profile sent by the LPA. Correspondingly, after sending the storage metadata to the eUICC, the LPA may first send the authentication algorithm program to the eUICC. After receiving the message sent by the eUICC to indicate completion of adding the authentication algorithm program, the LPA sends the profile to the eUICC.

The authentication algorithm program and the profile are stored in one bound profile package and the package is downloaded to the eUICC, so that the authentication algorithm program lacking in the eUICC can be downloaded to the eUICC during the process of downloading the profile. After the profile is activated, the authentication algorithm program can be directly used to perform identity validity verification on the eUICC. Therefore, by storing the authentication algorithm program and the profile in one bound profile package and downloading the package to the eUICC, the authentication algorithm program can be downloaded to the eUICC in a more timely manner.

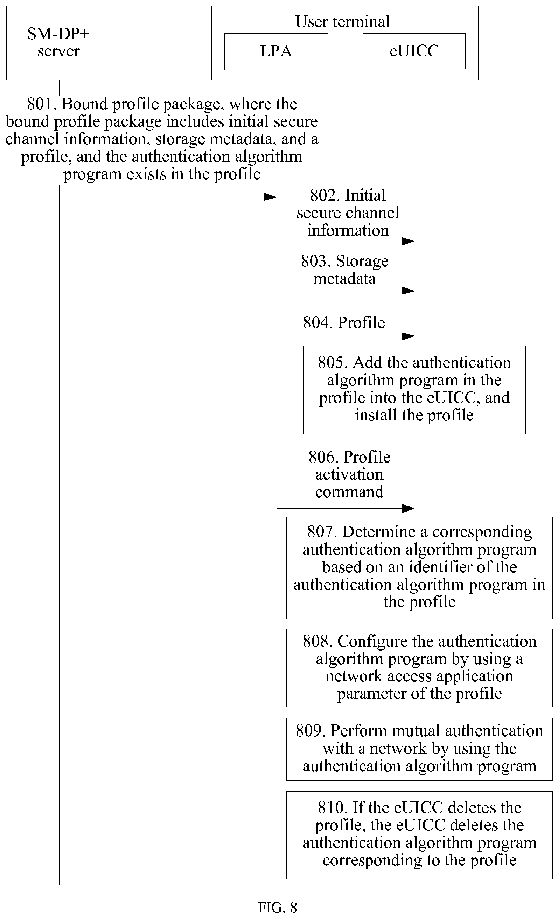

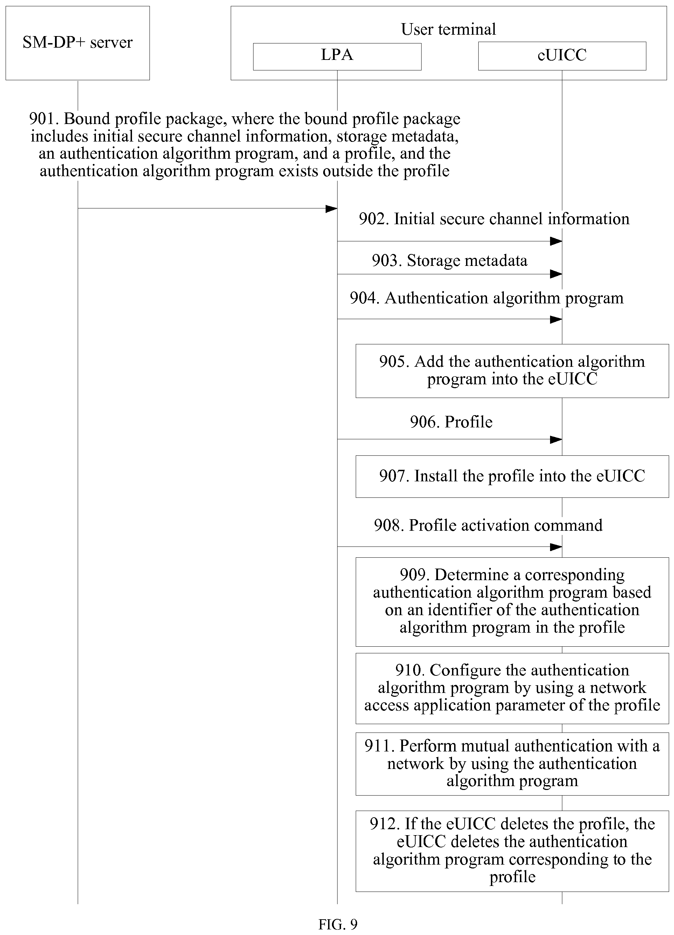

In an optional implementation, as shown in FIG. 8 and FIG. 9, after receiving the authentication algorithm program and the profile that are sent by the LPA, the eUICC may further install the profile in the eUICC. After adding the authentication algorithm program in the profile into the eUICC and installing the profile into the eUICC, the eUICC may further receive a profile activation command sent by the LPA, where the profile activation command instructs the eUICC to activate the profile; the eUICC determines a corresponding authentication algorithm program based on the identifier of the authentication algorithm program in the profile; and the eUICC configures the authentication algorithm program by using a network access application parameter of the profile. The eUICC performs mutual authentication with a network by using the authentication algorithm program.

Optionally, the profile activation command includes an identifier of the profile in the previously downloaded bound profile package. The eUICC determines the corresponding authentication algorithm program by reading the identifier of the authentication algorithm program in the profile. The identifier of the authentication algorithm program may be stored in a file system part in the profile. The authentication algorithm program is an authentication algorithm program included in the previously downloaded bound profile package. The eUICC obtains the authentication algorithm program in the bound profile package, and installs or adds the authentication algorithm program into an authentication algorithm program set in a telecom framework. There may be a plurality of authentication algorithm programs in the eUICC, and each authentication algorithm program corresponds to a unique identifier of authentication algorithm program. Therefore, the eUICC determines the previously added authentication algorithm program based on the identifier of the authentication algorithm program in the profile. After determining the authentication algorithm program, the eUICC configures the authentication algorithm program by using a network access application parameter of the profile. After configuring the network application parameter, the eUICC performs mutual authentication with a network by using the authentication algorithm program. After the authentication succeeds, a terminal to which the eUICC belongs can access the network. The network here may be a network-side mobility management entity (Mobility Management Entity) or an authentication center.

This implementation is applied, so that after the profile is activated, the authentication algorithm program in the profile can be directly used to perform identity validity verification on the eUICC, or the authentication algorithm program that is located in the bound profile package inclusive of the profile and that is downloaded to the eUICC can be used to perform identity validity verification on a network entity.

In an optional implementation, as shown in FIG. 8 and FIG. 9, if the eUICC deletes the profile, the eUICC deletes the authentication algorithm program corresponding to the profile. The authentication algorithm program corresponding to the profile is the authentication algorithm program located in the bound profile package inclusive of the profile. The authentication algorithm program corresponding to the profile is used to perform identity validity verification on the eUICC after the profile is installed and activated. If the authentication algorithm program is implemented by using a private authentication algorithm of an operator, and if the profile corresponding to the authentication algorithm program is deleted, then the authentication algorithm program corresponding to the profile has no opportunity of being invoked temporarily. Therefore, if the eUICC deletes the profile, the eUICC deletes the authentication algorithm program corresponding to the profile. This is beneficial to saving storage space. Specifically, the eUICC may create a mapping relationship between the authentication algorithm program and the profile after determining that the added or installed authentication algorithm program and the profile are in one bound profile package. After determining that the profile is deleted, the eUICC may delete the corresponding authentication algorithm program based on the previously created mapping relationship.

In an optional implementation, the authentication algorithm program is located outside the profile, and the LPA may receive fifth information sent by the SM-DP+ server; Correspondingly, in FIG. 7, the specific implementation of sending the authentication algorithm program by the LPA to the eUICC is: The LPA sends the authentication algorithm program in the bound profile package to the eUICC based on the fifth information; after sending the authentication algorithm program in the bound profile package to the eUICC based on the fifth information, the LPA may further receive a message sent by the eUICC to indicate completion of adding the authentication algorithm program; and after receiving the message sent by the eUICC to indicate completion of adding the authentication algorithm program, the LPA sends the profile in the bound profile package to the eUICC. Optionally, the LPA may send the profile in the bound profile package to the eUICC first; and after receiving a message sent by the eUICC to indicate completion of installing the profile, the LPA sends the authentication algorithm program in the bound profile package to the eUICC based on the fifth information.

By applying this implementation, the LPA can accurately determine the authentication algorithm program in the bound profile package based on the fifth information.

Optionally, the LPA may send the authentication algorithm program to the eUICC through an ES10d interface between an LPADd and LPA services in an ISD-R of the eUICC. Through the ES10d interface, the LPA receives the message sent by the eUICC to indicate completion of adding or installing the authentication algorithm program. The message for indicating completion of adding the authentication algorithm program may be carried in a response application protocol data unit (response APDU) command. After receiving the message sent by the eUICC to indicate completion of adding the authentication algorithm program, the LPA sends the profile in the bound profile package to the eUICC through an ES10b interface between an LPDd and the LPA services.

Optionally, the eUICC may receive, through an ES10d interface between LPA services in an ISD-R and an LPADd in the LPA, the authentication algorithm program sent by the LPA. After completing adding or installation of the authentication algorithm program, the eUICC sends, through the ES10b interface, a message to the LPA to indicate completion of adding or installing the authentication algorithm program, where the message for indicating completion of adding the authentication algorithm program may be carried in a response application protocol data unit (response APDU) command. After sending the message used to indicate completion of adding the authentication algorithm program to the LPA, the eUICC receives the profile in the bound profile package sent by the LPA through an ES10b interface between an LPDd and the LPA services.

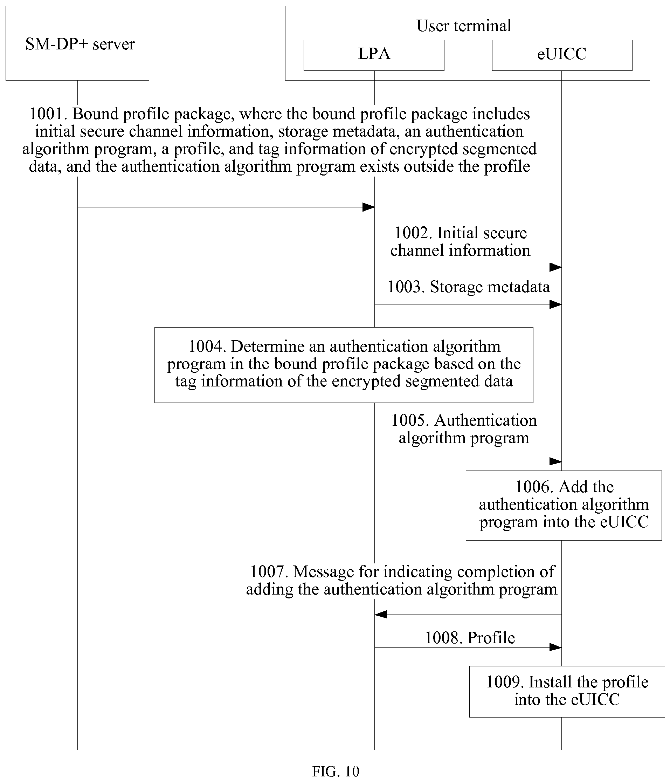

In an optional implementation, the fifth information may be tag information of encrypted segmented data of the bound profile package. The encrypted segmented data of the bound profile package is the authentication algorithm program and the profile in the bound profile package. For example, when the fifth information is the tag information of the encrypted segmented data of the bound profile package, the process of sending the bound profile package by the LPA to the eUICC may be shown in FIG. 10.

Specifically, a data structure of the authentication algorithm program in the bound profile package is in a TLV format (where an example format is shown in Table 2). The bound profile package may reserve one tag (such as 'A4' in the table) or more tags to represent a newly added authentication algorithm program. For example, in Table 2, 'A4' represents an authentication algorithm program. The LPA can identify the authentication algorithm program part based on a tag in segmented data of the bound profile package.

**Table 2**

| Tag (tag) | Length (Length) | Value description (Value Description) | | |
|---|---|---|---|---|
| 'A3' | Var. | sequenceOf86 | | |
| | | '86' | Var. | Encrypted profile package |
| 'A4' | Var. | sequenceOf85 | | |
| | | '85' | Var. | Encrypted authentication algorithm program |

By applying this implementation, the LPA can accurately determine the authentication algorithm program in the bound profile package based on tag information of the encrypted segmented data.

In an optional implementation, the fifth information may be length information of the authentication algorithm program. By applying this implementation, the LPA can accurately determine the authentication algorithm program in the bound profile package based on the length information of the authentication algorithm program.

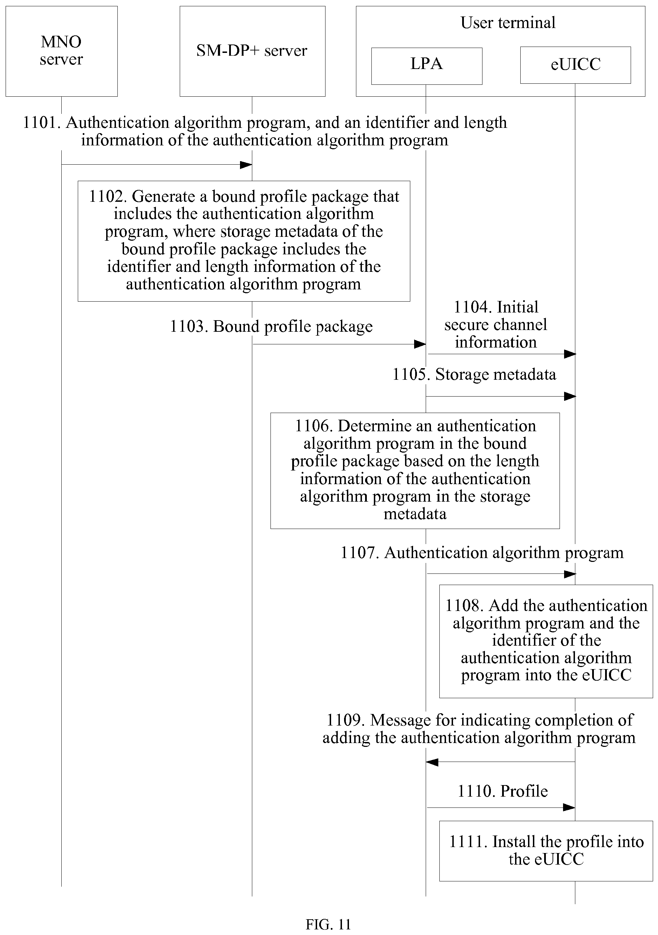

In an optional implementation, the length information of the authentication algorithm program may be included in storage metadata of the bound profile package. As shown in FIG. 11, the MNO can send an identifier of the authentication algorithm program and the length information of the authentication algorithm program to the SM-DP+ server in addition to sending the authentication algorithm program to the SM-DP+ server. After receiving the identifier of the authentication algorithm program and the length information of the authentication algorithm program that are sent by the MNO, the SM-DP+ server may further let storage metadata of the bound profile package include the identifier of the authentication algorithm program and the length information of the authentication algorithm program, so that the identifier of the authentication algorithm program and the length information of the authentication algorithm program are sent to the LPA and the eUICC.

This implementation is applied, so that the length information of the authentication algorithm program can be notified to the LPA. Therefore, the LPA can accurately send the authentication algorithm program part to the eUICC for adding or installing first, thereby ensuring that after the profile is installed and activated, a network can be accessed successfully by using the authentication algorithm program that is previously added or installed.

Correspondingly, after receiving the storage metadata of the bound profile package, the LPA obtains the length information of the authentication algorithm program from the storage metadata, determines the authentication algorithm program in the bound profile package based on the length information of the authentication algorithm program, and sends the determined authentication algorithm program to the eUICC. Optionally, after receiving the storage metadata sent by the LPA, the eUICC obtains the identifier of the authentication algorithm program from the storage metadata, and adds the identifier of the authentication algorithm program into the eUICC.

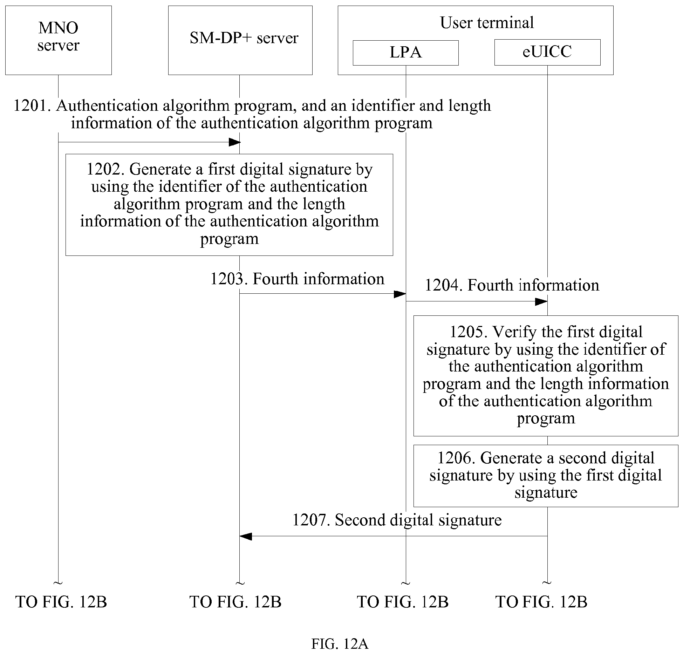

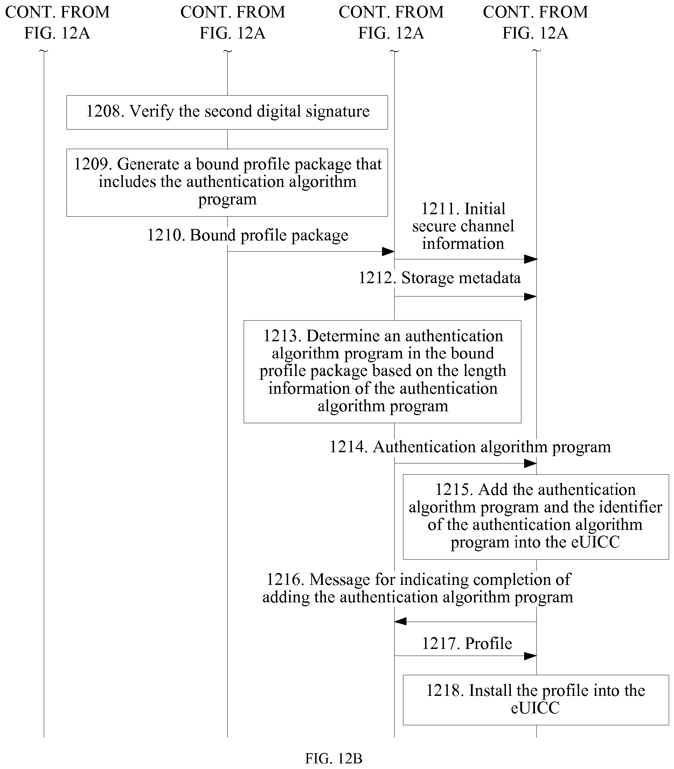

In an optional implementation, as shown in FIG. 12A and FIG. 12B, the SM-DP+ server, the MNO, the LPA, and the eUICC may further perform the following steps: The MNO sends the identifier of the authentication algorithm program and the length information of the authentication algorithm program to the SM-DP+ server; after receiving the identifier of the authentication algorithm program, the length information of the authentication algorithm program, and the authentication algorithm program that are sent by the MNO, the SM-DP+ server generates a first digital signature by using an identifier of a first authentication algorithm program and length information of the first authentication algorithm program; the SM-DP+ server sends fourth information to the LPA, where the fourth information includes the identifier of the authentication algorithm program, the length information of the authentication algorithm program, and the first digital signature; the LPA sends the fourth information to the eUICC; after receiving the fourth information sent by the LPA, the eUICC verifies the first digital signature by using the identifier of the authentication algorithm program and the length information of the authentication algorithm program; the eUICC generates a second digital signature by using the first digital signature if the eUICC succeeds in verifying the first digital signature; the eUICC sends the second digital signature to the SM-DP+ server by using the LPA; after receiving the second digital signature sent by the eUICC by using the LPA, the SM-DP+ server verifies the second digital signature; if succeeding in verifying the second digital signature, the SM-DP+ server performs a step of generating the bound profile package that includes the authentication algorithm program. That is, this implementation is applied, so that the length information of the authentication algorithm program can be sent to the LPA without being included in the storage metadata of the bound profile package.

This implementation is applied, so that identity validity verification on the SM-DP+ server and the eUICC can be performed, and the length information of the authentication algorithm program can also be notified to the LPA. Therefore, the LPA can accurately send the authentication algorithm program part to the eUICC for adding or installing first, thereby ensuring that after the profile is installed and activated, a network can be accessed successfully by using the authentication algorithm program that is previously added or installed.

Correspondingly, after receiving the bound profile package, the LPA determines the authentication algorithm program in the bound profile package based on the received length information of the authentication algorithm program, and sends the determined authentication algorithm program to the eUICC. Optionally, after receiving the authentication algorithm program sent by the LPA, the eUICC adds the authentication algorithm program and the identifier of the authentication algorithm program into the eUICC.

In an optional implementation, the initial secure channel information of the bound profile package includes a remote operation type identifier whose value is install-bound-patch and ProfileType, where the install-bound-patch and the ProfileType are used to indicate that the bound profile package includes the authentication algorithm program and a profile. Specifically, by parsing a remote operation type identifier whose value is install-bound-patch and ProfileType, the eUICC can learn that the bound profile package includes the authentication algorithm program and the profile. After obtaining all the authentication algorithm programs, the eUICC may first add or install an authentication algorithm program, and send a successful adding result message or a successful installation result message to the LPA to obtain the profile from the LPA. The eUICC installs the profile. Optionally, the install-bound-patch and the ProfileType may also be used to indicate a security level of the authentication algorithm program and the profile. After receiving the initial secure channel information sent by the LPA, the eUICC verifies the remote operation type identifier whose value is install-bound-patch and ProfileType and that is included in the initial secure channel information. If it is verified that the remote operation type identifier is one of defined types, the eUICC processes the authentication algorithm program and the profile in the bound profile package separately by using a security level corresponding to the remote operation type. For example, the remote operation type identifier whose value is install-bound-patch and ProfileType indicates that the security level of the profile and the authentication algorithm program is integrity protection and encryption protection.

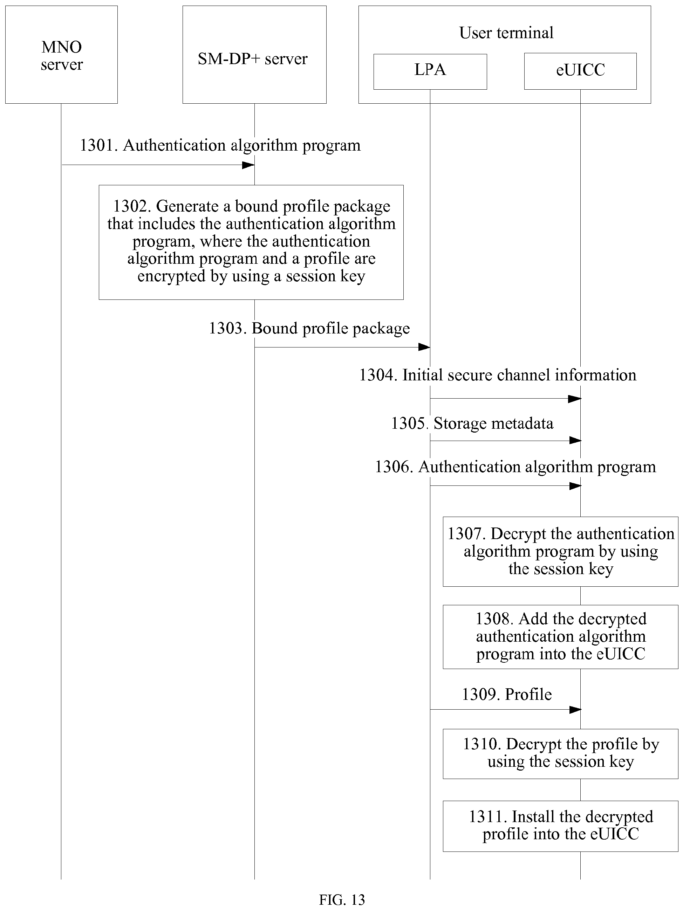

In an optional implementation, as shown in FIG. 13, the authentication algorithm program is located outside the profile. While the SM-DP+ server generates the bound profile package, the SM-DP+ server encrypts the authentication algorithm program and the profile by using a session key. Correspondingly, after receiving the authentication algorithm program sent by the LPA, the eUICC decrypts the authentication algorithm program by using the session key. Optionally, after completing the operation of adding the authentication algorithm program to the eUICC, the eUICC sends a message of successful adding of the authentication algorithm program to the LPA. The message of successful adding of the authentication algorithm program may be carried in a response application protocol data unit (response APDU) command, and the message of successful adding of the authentication algorithm program is used to instruct the LPA to send a profile part in the bound profile package to the eUICC. After receiving the profile sent by the LPA, the eUICC decrypts the profile by using the session key.

The eUICC may first receive the profile sent by the LPA, and then the eUICC decrypts the profile by using the session key, and installs the profile. Optionally, after completing the operation of installing the profile, the eUICC sends a profile installation success message to the LPA. The profile installation success message may be carried in a response application protocol data unit (response APDU) command, and the profile installation success message is used to instruct the LPA to send the authentication algorithm program in the bound profile package to the eUICC. The eUICC receives the authentication algorithm program sent by the LPA, and the eUICC decrypts the authentication algorithm program by using the session key. Upon completion of the decryption, the eUICC adds the authentication algorithm program into the eUICC. That is, the eUICC may first receive the authentication algorithm program sent by the LPA, and then receive the profile sent by the LPA; or the eUICC may first receive the profile sent by the LPA, and then receive the authentication algorithm program sent by the LPA. This is not limited in this embodiment of the present invention.

Security of data transmission can be improved by encrypting the authentication algorithm program by using the session key.

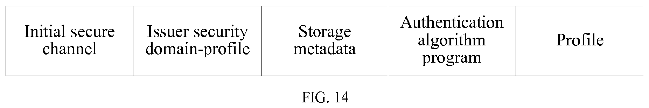

Optionally, a schematic structural diagram of a bound profile package generated by the SM-DP+ server may be shown in FIG. 14. As shown in FIG. 14, the bound profile package may include initial secure channel information, an issuer security domain-profile (Configure ISDP), storage metadata, an authentication algorithm program, and a profile part. Optionally, the profile may also precede the authentication algorithm program.

Optionally, when generating the bound profile package, the SM-DP+ server may use the session key to encrypt the issuer security domain-profile in the bound profile package, the authentication algorithm program, and the profile. After receiving the initial secure channel information, the eUICC obtains, from the initial secure channel information, a public key in a one-time key pair generated by the SM-DP+ server, generates a session key by using a digital certificate and a private key in a one-time key pair generated by the eUICC, and uses the session key to decrypt the issuer security domain-profile, the authentication algorithm program, and the profile that are received from the LPA.

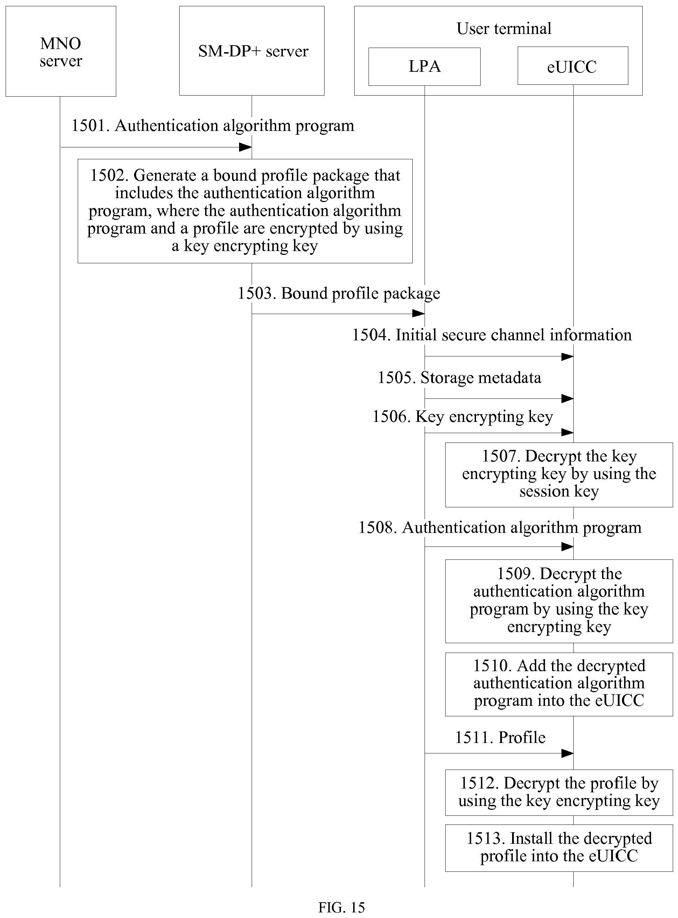

In an optional implementation, as shown in FIG. 15, the authentication algorithm program is located outside the profile, the bound profile package further includes a key encrypting key. While the SM-DP+ server generates the bound profile package, the SM-DP+ server encrypts the authentication algorithm program and the profile by using the key encrypting key. The key encrypting key is encrypted by using a session key. Correspondingly, before receiving the authentication algorithm program sent by the LPA, the eUICC may receive the key encrypting key sent by the LPA, and decrypt the key encrypting key by using the session key. Optionally, after completing the operation of adding or installing the authentication algorithm program, the eUICC sends a message of successful adding of the authentication algorithm program to the LPA. The message of successful adding of the authentication algorithm program may be carried in a response application protocol data unit (response APDU) command, and the message of successful adding of the authentication algorithm program is used to instruct the LPA to send a profile part in the bound profile package to the eUICC. After receiving the authentication algorithm program sent by the LPA, the eUICC may further decrypt the authentication algorithm program by using the key encrypting key. After receiving the profile sent by the LPA, the eUICC may further decrypt the profile by using the key encrypting key.

The eUICC may first receive the profile sent by the LPA, and then the eUICC decrypts the profile by using the key encrypting key, and installs the profile. Optionally, after completing the operation of installing the profile, the eUICC sends a profile installation success message to the LPA. The profile installation success message may be carried in a response application protocol data unit (response APDU) command, and the profile installation success message is used to instruct the LPA to send the authentication algorithm program in the bound profile package to the eUICC. The eUICC receives the authentication algorithm program sent by the LPA, and the eUICC decrypts the authentication algorithm program by using the key encrypting key. Upon completion of the decryption, the eUICC adds the authentication algorithm program into the eUICC. That is, the eUICC may first receive the authentication algorithm program sent by the LPA, and then receive the profile sent by the LPA; or the eUICC may first receive the profile sent by the LPA, and then receive the authentication algorithm program sent by the LPA. This is not limited in this embodiment of the present invention.

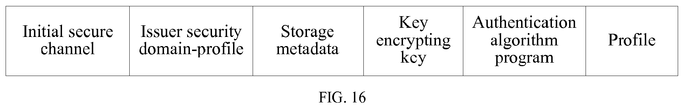

Optionally, a schematic structural diagram of a bound profile package generated by the SM-DP+ server may be shown in FIG. 16. As shown in FIG. 16, the bound profile package may include initial secure channel information, an issuer security domain-profile, storage metadata, a key encrypting key, an authentication algorithm program, and a profile. Optionally, the profile may also precede the authentication algorithm program.

Optionally, while the SM-DP+ server generates the bound profile package, the SM-DP+ server may use the key encrypting key to encrypt the authentication algorithm program and the profile, and then use the session key to encrypt a configuration issuer security domain-profile and the key encrypting key in the bound profile package. After receiving the initial secure channel information, the eUICC obtains, from the initial secure channel information, a public key in a one-time key pair generated by the SM-DP+ server, generates a session key by using a digital certificate and a private key in a one-time key pair generated by the eUICC, and uses the session key to decrypt the configuration issuer security domain-profile and the key encrypting key that are received from the LPA. After decrypting the key encrypting key, the eUICC decrypts the received authentication algorithm program and profile by using the key encrypting key.

Security of data transmission can be improved by encrypting the authentication algorithm program by using the key encrypting key.

In an optional implementation, the authentication algorithm program is located outside the profile, and the bound profile package further includes a first key encrypting key and a second key encrypting key. While the SM-DP+ server generates the bound profile package, the SM-DP+ server encrypts the authentication algorithm program by using the first key encrypting key, and encrypts the profile by using the second key encrypting key, where the first key encrypting key and the second key encrypting key are encrypted by using the session key. Correspondingly, before receiving the authentication algorithm program sent by the LPA, the eUICC may further receive a first key encrypting key, and decrypt the first key encrypting key by using the session key. After receiving the authentication algorithm program sent by the LPA, the eUICC may further decrypt the authentication algorithm program by using the first key encrypting key. Optionally, after completing the operation of adding the authentication algorithm program to the eUICC, the eUICC sends a message of successful adding of the authentication algorithm program to the LPA. The message of successful adding of the authentication algorithm program may be carried in a response application protocol data unit (response APDU) command, and the message of successful adding of the authentication algorithm program is used to instruct the LPA to send a profile part in the bound profile package to the eUICC. Before receiving the profile sent by the LPA, the eUICC may further receive a second key encrypting key sent by the LPA, and decrypt the second key encrypting key by using the session key. After receiving the profile sent by the LPA, the eUICC may further decrypt the profile by using the second key encrypting key. The eUICC may also receive the profile first, and decrypt the profile by using the second key encrypting key that is received before the profile is received. After receiving the profile, the eUICC sequentially receives the first key encrypting key and the authentication algorithm program, and decrypts the authentication algorithm program by using the first key encrypting key.

Specifically, the second key encrypting key may be the key encrypting key of the profile. Upon completion of preparing a profile, the SM-DP+ server can generate a profile key encrypting key immediately, and encrypt the profile by using the profile key encrypting key. The first key encrypting key may be the key encrypting key of the authentication algorithm program. The authentication algorithm program may encrypt the authentication algorithm program with the key encrypting key of the authentication algorithm program after the SM-DP+ server obtains the authentication algorithm program corresponding to the eUICC. The first key encrypting key may also be a second key encrypting key. For example, upon completion of preparing the profile, the SM-DP+ server also completes preparing a corresponding authentication algorithm program, and encrypts the authentication algorithm program and the profile by using the key encrypting key. In this case, the key encrypting key may be sent to the eUICC by using the LPA only before the profile is sent, or may be sent to the eUICC by using the LPA only before the authentication algorithm program is sent. This is not limited in this embodiment of the present invention.

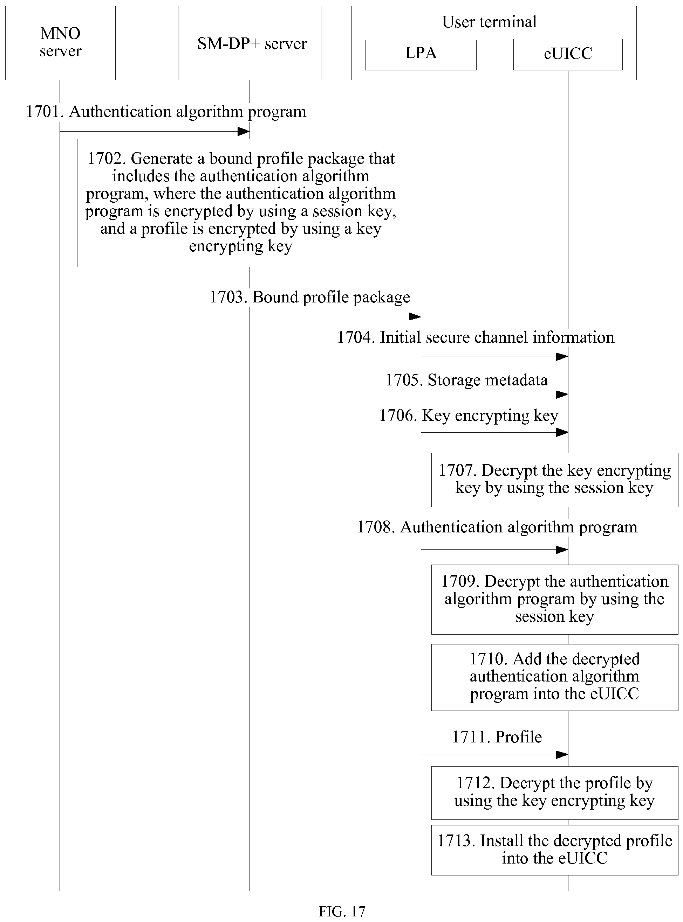

In an optional implementation, as shown in FIG. 17, the authentication algorithm program is located outside the profile, and the bound profile package further includes the key encrypting key. While the SM-DP+ server generates the bound profile package, the SM-DP+ server encrypts the authentication algorithm program by using the session key, and encrypts the profile by using the key encrypting key. Correspondingly, before receiving the profile sent by the LPA, the eUICC may further receive the key encrypting key sent by the LPA, and decrypt the key encrypting key by using the session key. After receiving the authentication algorithm program sent by the LPA, the eUICC may decrypt the authentication algorithm program by using the session key. Optionally, after completing the operation of adding or installing the authentication algorithm program, the eUICC sends a message of successful adding of the authentication algorithm program to the LPA. The message of successful adding of the authentication algorithm program may be carried in a response application protocol data unit (response APDU) command, and the message of successful adding of the authentication algorithm program is used to instruct the LPA to send a profile part in the bound profile package to the eUICC. After receiving the profile sent by the LPA, the eUICC may decrypt the profile by using the key encrypting key.

The eUICC may first receive the profile sent by the LPA, and then the eUICC decrypts the profile by using the key encrypting key, and installs the profile. Optionally, after completing the operation of installing the profile, the eUICC sends a profile installation success message to the LPA. The profile installation success message may be carried in a response application protocol data unit (response APDU) command, and the profile installation success message is used to instruct the LPA to send the authentication algorithm program in the bound profile package to the eUICC. The eUICC receives the authentication algorithm program sent by the LPA, and the eUICC decrypts the authentication algorithm program by using the session key. Upon completion of the decryption, the eUICC adds the authentication algorithm program into the eUICC. That is, the eUICC may first receive the authentication algorithm program sent by the LPA, and then receive the profile sent by the LPA; or the eUICC may first receive the profile sent by the LPA, and then receive the authentication algorithm program sent by the LPA. After receiving the authentication algorithm program sent by the LPA, the eUICC may receive the key encrypting key sent by the LPA, and after receiving the key encrypting key, the eUICC receives the profile sent by the LPA; or, after receiving the key encrypting key sent by the LPA, the eUICC may receive the profile sent by the LPA, and after receiving the profile, the eUICC receives the authentication algorithm program sent by the LPA; or, after receiving the key encrypting key sent by the LPA, the eUICC may receive the authentication algorithm program sent by the LPA, and after receiving the authentication algorithm program, the eUICC receives the profile sent by the LPA. This is not limited in this embodiment of the present invention.

In an optional implementation, the authentication algorithm program is located outside the profile, and the bound profile package further includes a key encrypting key. The key encrypting key is encrypted by using the session key. While the SM-DP+ server generates the bound profile package, the SM-DP+ server encrypts the authentication algorithm program by using the key encrypting key, and encrypts the profile by using the session key. Correspondingly, after receiving the profile sent by the LPA, the eUICC may further receive the key encrypting key sent by the LPA, and decrypt the key encrypting key by using the session key. After receiving the authentication algorithm program sent by the LPA, the eUICC may further decrypt the authentication algorithm program by using the key encrypting key; or, the eUICC may first receive the key encrypting key sent by the LPA, and decrypt the key encrypting key by using the session key. After completion of the decryption, the eUICC receives the authentication algorithm program sent by the LPA, and adds the authentication algorithm program into the eUICC. Optionally, after completing the operation of adding the authentication algorithm program into the eUICC, the eUICC sends a message of successful adding of the authentication algorithm program to the LPA. The message of successful adding of the authentication algorithm program may be carried in a response application protocol data unit (response APDU) command, and the message of successful adding of the authentication algorithm program is used to instruct the LPA to send the profile in the bound profile package to the eUICC. The eUICC receives the profile sent by the LPA, and the eUICC decrypts the profile by using the session key. After completion of the decryption, the eUICC installs the profile. That is, the eUICC may first receive the key encrypting key sent by the LPA, and then receive the authentication algorithm program sent by the LPA, and finally receive the profile sent by the LPA; or, the eUICC may first receive the profile sent by the LPA, and then receive the key encrypting key sent by the LPA, and finally receive the authentication algorithm program sent by the LPA.

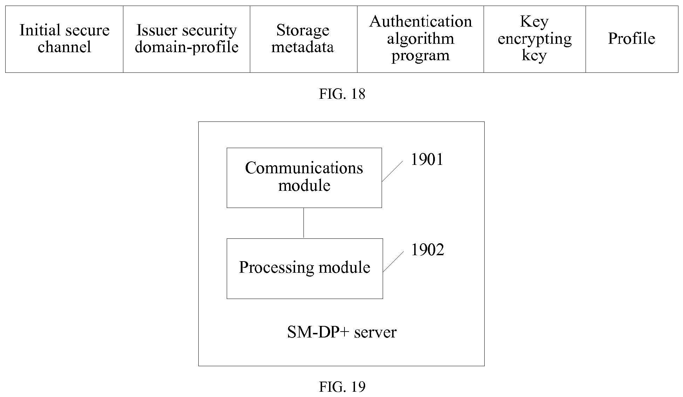

Optionally, a schematic structural diagram of a bound profile package generated by the SM-DP+ server may be shown in FIG. 16 and FIG 18. As shown in FIG. 16 and FIG. 18, the bound profile package may include initial secure channel information, a configuration issuer security domain-profile, storage metadata, a key encrypting key, an authentication algorithm program, and a profile. In FIG. 16, the key encrypting key exists before the authentication algorithm program; and in FIG. 18, the key encrypting key exists after the authentication algorithm program. That is, in this implementation, the LPA may first send the key encrypting key to the eUICC, and then send the authentication algorithm program to the eUICC, or the LPA may first send the authentication algorithm program to the eUICC and then send the key encrypting key to the eUICC.

Optionally, the SM-DP+ server may use the key encrypting key to encrypt the profile, and then use the session key to encrypt the configuration issuer security domain-profile key encrypting key and the authentication algorithm program in the bound profile package. After receiving the initial secure channel information, the eUICC obtains, from the initial secure channel information, a public key in a one-time key pair generated by the SM-DP+ server, generates a session key by using a digital certificate and a private key in a one-time key pair generated by the eUICC, and uses the session key to decrypt the configuration issuer security domain-profile, the key encrypting key, and the authentication algorithm program that are received from the LPA. After decrypting the key encrypting key, the eUICC decrypts the received profile by using the key encrypting key.

The authentication algorithm program is encrypted by using the session key and the profile is encrypted by using the key encrypting key to improve security of data transmission.

In an optional implementation, the authentication algorithm program is encrypted by an MNO by using a public key of the eUICC. That is, the authentication algorithm program received by the SM-DP+ server has been encrypted by the MNO by using the public key of the eUICC. Therefore, the SM-DP+ server may not encrypt the authentication algorithm program any longer, but directly sends, by using the LPA, the authentication algorithm program encrypted by the public key of the eUICC to the eUICC. After receiving the authentication algorithm program encrypted by the public key of the eUICC, the eUICC decrypts the authentication algorithm program by using a private key of the eUICC. Optionally, to improve data security, on condition that the authentication algorithm program has been encrypted by the MNO by using the public key of the eUICC, the SM-DP+ server may further encrypt the authentication algorithm program again, and the SM-DP+ server may use the key encrypting key or the session key to encrypt the authentication algorithm program that has been encrypted by the public key of the eUICC. For example, the SM-DP+ server uses the key encrypting key to encrypt the authentication algorithm program that has been encrypted by the public key of the eUICC. Correspondingly, after receiving the authentication algorithm program, the eUICC first uses the key encrypting key to decrypt the authentication algorithm program, and then uses the private key of the eUICC to decrypt the authentication algorithm program. In another example, the SM-DP+ server uses the session key to encrypt the authentication algorithm program that has been encrypted by the public key of the eUICC. Correspondingly, after receiving the authentication algorithm program, the eUICC first uses the session key to decrypt the authentication algorithm program, and then uses the private key of the eUICC to decrypt the authentication algorithm program.

Security of data transmission can be improved by encrypting the authentication algorithm program by using the public key of the eUICC.

In an optional implementation, before encrypting the authentication algorithm program by using the public key of the eUICC, the MNO may further perform the following steps: When agreeing with the card vendor on constraints for generating the authentication algorithm program (for example, the EID issuer identifier, the platform/operating system version information, the firmware version information of the eUICC, and the capability information of the eUICC), the MNO obtains an eUICC certificate (CERT.EUICC.ECDSA) provided by all card vendors. The eUICC certificate includes the public key of the eUICC. After generating the authentication algorithm program, the MNO may match the authentication algorithm program of the corresponding version based on the EID information in the eUICC certificate. The matching may be implemented by finding the authentication algorithm program of the corresponding version based on the EID issuer identifier in the EID information. Alternatively, the matching may be implemented by finding the authentication algorithm program of the corresponding version based on the platform/operating system version information in the EID. Alternatively, the matching may be implemented by finding the authentication algorithm program of the corresponding version based on the EID issuer identifier and the platform/operating system version information in the EID. Alternatively, the matching may be implemented by finding the authentication algorithm program of the corresponding version based on the EID issuer identifier, the platform/operating system version information, the firmware version information of the eUICC, or the capability information of the eUICC in the EID. The firmware version information of the eUICC and the capability information of the eUICC may be provided by the card vendor when the MNO and the card vendor agree to generate the constraints of the authentication algorithm program. That is, after generating the authentication algorithm program, the MNO can find the corresponding authentication algorithm program based on one or more of the EID issuer identifier, the platform/operating system version information, the firmware version information of the eUICC, or the capability information of the eUICC.

Alternatively, the session key and the key encrypting key each include a cipher key and an integrity key. The cipher key is used to encrypt and decrypt messages, and the integrity key is used to generate an integrity verification field and verify the integrity verification field.

In the embodiments of the present invention, functional units of the SM-DP+ server, the LPA, and the eUICC may be divided based on the foregoing method examples. For example, the functional units may be divided corresponding to functions, or two or more functions may be integrated into one unit. The integrated unit may be implemented in a form of hardware, or may be implemented in a form of a software functional unit. It should be noted that, in this embodiment of the present invention, unit division is exemplary, and is merely a logical function division. In actual implementation, another division manner may be used.

FIG. 19 is a schematic structural diagram of an SM-DP+ server according to an embodiment of the present invention. As shown in FIG. 19, the SM-DP+ server includes a communications module 1901 and a processing module 1902.

The communications module 1901 is configured to receive an authentication algorithm program sent by a mobile network operator MNO, where the authentication algorithm program corresponds to target information, and the target information is at least one of: firmware version information of an embedded universal integrated circuit card eUICC, an embedded universal integrated circuit card identifier EID issuer identifier of the eUICC, platform/operating system version information of the eUICC, or capability information of the eUICC; the processing module 1902 is configured to generate a bound profile package that includes the authentication algorithm program; and the communications module 1901 is further configured to send the bound profile package to the eUICC by using a local profile assistant LPA.

Optionally, the authentication algorithm program is used to be added into an authentication algorithm program set of the eUICC. Optionally, the authentication algorithm program set may be located in a telecom framework of the eUICC.

In an optional implementation, the target information includes the firmware version information of the eUICC, the EID issuer identifier of the eUICC, and the platform/operating system version information of the eUICC; and the communications module 1901 is further configured to: before receiving the authentication algorithm program sent by the mobile network operator MNO, receive first information sent by the MNO, where the first information includes the EID information. The communications module 1901 is further configured to receive second information sent by the LPA, where the second information includes eUICC information. The processing module 1902 is further configured to obtain the firmware version information from the eUICC information. The processing module 1902 is further configured to obtain the EID issuer identifier and the platform/operating system version information from the EID information. The communications module 1901 is further configured to send third information to the MNO, where the third information includes the firmware version information, the EID issuer identifier, and the platform/operating system version information.

In an optional implementation, the target information further includes the capability information of the eUICC, and the processing module 1902 is further configured to obtain the capability information of the eUICC from the eUICC information. The third information further includes the capability information of the eUICC.

In an optional implementation, the first information further includes an authentication algorithm program adding identifier, where the authentication algorithm program adding identifier is used to instruct the SM-DP+ server to request the authentication algorithm program from the MNO after obtaining the firmware version information, the EID issuer identifier, and the platform/operating system version information.

In an optional implementation, the second information further includes an authentication algorithm program adding identifier, where the authentication algorithm program adding identifier is used to instruct the SM-DP+ server to request the authentication algorithm program from the MNO after obtaining the firmware version information, the EID issuer identifier, and the platform/operating system version information.

In an optional implementation, the third information is HandleDownloadProgressInfo.

In an optional implementation, the communications module 1901 is further configured to receive an identifier of the authentication algorithm program and length information of the authentication algorithm program that are sent by the MNO. The processing module 1902 is further configured to generate, after the communications module 1901 receives the authentication algorithm program sent by the MNO, a first digital signature by using an identifier of a first authentication algorithm program and length information of the first authentication algorithm program. The communications module 1901 is further configured to send fourth information to the eUICC by using the LPA, where the fourth information includes the identifier of the authentication algorithm program, the length information of the authentication algorithm program, and the first digital signature. The communications module 1901 is further configured to receive a second digital signature sent by the eUICC by using the LPA. The processing module 1902 is further configured to verify the second digital signature. If the processing module 1902 succeeds in verifying the second digital signature, the processing module 1902 is triggered to generate the bound profile package that includes the authentication algorithm program.

In an optional implementation, the communications module 1901 is further configured to receive an identifier of the authentication algorithm program and length information of the authentication algorithm program that are sent by the MNO. The storage metadata of the bound profile package includes the identifier of the authentication algorithm program and the length information of the authentication algorithm program.

In an optional implementation, initial secure channel information of the bound profile package includes a remote operation type identifier whose value is install-bound-patch and ProfileType, where the install-bound-patch and the ProfileType are used to indicate that the bound profile package includes the authentication algorithm program and a profile.

In an optional implementation, the bound profile package further includes the profile, and the authentication algorithm program and the profile are encrypted by using a session key.

In an optional implementation, the bound profile package further includes the profile and a key encrypting key, and the authentication algorithm program and the profile are encrypted by using the key encrypting key.

In an optional implementation, the bound profile package further includes the profile and a key encrypting key, and the authentication algorithm program is encrypted by using a session key and the profile is encrypted by using the key encrypting key.

In an optional implementation, the authentication algorithm program is encrypted by the MNO by using a public key of the eUICC.

Based on the same inventive concept, a principle of the SM-DP+ server for resolving problems according to this embodiment of the present invention is similar to that of the method embodiment of the present invention, and therefore, the implementation of the SM-DP+ server can be learned by referring to the implementation of the method, and for brevity, is not repeated herein again.

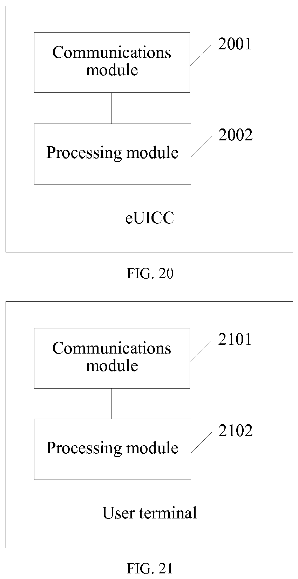

FIG. 20 is a schematic structural diagram of an eUICC according to an embodiment of the present invention. As shown in FIG. 20, the eUICC includes a communications module 2001 and a processing module 2002.

The communications module 2001 is configured to receive a bound profile package sent by a local profile assistant LPA, where the bound profile package includes initial secure channel information, storage metadata, an authentication algorithm program, and a profile, the authentication algorithm program corresponds to target information, and the target information is at least one of: firmware version information of the eUICC, an embedded universal integrated circuit card identifier EID issuer identifier of the eUICC, platform/operating system version information of the eUICC, or capability information of the eUICC; and the processing module 2002 is configured to add the authentication algorithm program into the eUICC.

In an optional implementation, the communications module 2001 is further configured to receive, before the communications module 2001 receives the initial secure channel information sent by the LPA, fourth information sent by the SM-DP+ server by using the LPA, where the fourth information includes an identifier of the authentication algorithm program, length information of the authentication algorithm program, and a first digital signature; the processing module 2002 is further configured to verify the first digital signature by using the identifier of the authentication algorithm program and the length information of the authentication algorithm program; the processing module 2002 is further configured to generate a second digital signature by using the first digital signature if the first digital signature is verified successfully; and the communications module 2001 is further configured to send the second digital signature to the SM-DP+ server by using the LPA.

In an optional implementation, the processing module 2002 is further configured to add the identifier of the authentication algorithm program into the eUICC after the communications module 2001 receives the authentication algorithm program sent by the LPA.

In an optional implementation, the storage metadata includes the identifier of the authentication algorithm program, and the processing module 2002 is further configured to add the identifier of the authentication algorithm program into the eUICC.

In an optional implementation, the initial secure channel information of the bound profile package includes a remote operation type identifier whose value is install-bound-patch and ProfileType, where the install-bound-patch and the ProfileType are used to indicate that the bound profile package includes the authentication algorithm program and a profile.

In an optional implementation, the authentication algorithm program and the profile are encrypted by using a session key, and the processing module 2002 is further configured to decrypt the authentication algorithm program by using the session key after the communications module 2001 receives the authentication algorithm program sent by the LPA. The processing module 2002 is further configured to decrypt, by the eUICC, the profile by using the session key after the communications module 2001 receives the profile sent by the LPA.

In an optional implementation, the authentication algorithm program and the profile are encrypted by using a key encrypting key, the bound profile package further includes the key encrypting key, and the key encrypting key is encrypted by using the session key; and the communications module 2001 is further configured to: before receiving the authentication algorithm program sent by the LPA, receive the key encrypting key sent by the LPA. The processing module 2002 is further configured to decrypt the key encrypting key by using the session key. The processing module 2002 is further configured to decrypt the authentication algorithm program by using the key encrypting key after the communications module 2001 receives the authentication algorithm program sent by the LPA. The processing module 2002 is further configured to decrypt the profile by using the key encrypting key after the communications module 2001 receives the profile sent by the LPA.

In an optional implementation, the authentication algorithm program is encrypted by using the session key, the profile is encrypted by using the key encrypting key, the bound profile package further includes the key encrypting key, and the key encrypting key is encrypted by using the session key; and the communications module 2001 is further configured to: before receiving the profile sent by the LPA, receive the key encrypting key sent by the LPA. The processing module 2002 is further configured to decrypt the key encrypting key by using the session key. The processing module 2002 is further configured to decrypt the authentication algorithm program by using the session key after the communications module 2001 receives the authentication algorithm program sent by the LPA. The processing module 2002 is further configured to decrypt the profile by using the key encrypting key after the communications module 2001 receives the profile sent by the LPA.

In an optional implementation, the authentication algorithm program is encrypted by an MNO by using a public key of the eUICC, and the processing module 2002 is further configured to decrypt the authentication algorithm program by using a private key of the eUICC.

In an optional implementation, the processing module 2002 is further configured to delete the authentication algorithm program if the eUICC deletes the profile.

In an optional implementation, the communications module 2001 is further configured to receive, after the processing module 2002 adds the authentication algorithm program into the eUICC, a profile activation command sent by the LPA, where the profile activation command instructs the eUICC to activate the profile. The processing module 2002 is further configured to determine a corresponding authentication algorithm program based on the identifier of the authentication algorithm program in the profile. The processing module 2002 is further configured to configure the authentication algorithm program by using a network access application parameter of the profile. The processing module 2002 is further configured to perform mutual authentication with a network by using the authentication algorithm program.

Based on the same inventive concept, a principle of the eUICC for resolving problems according to this embodiment of the present invention is similar to that of the method embodiment of the present invention, and therefore, the implementation of the eUICC can be learned by referring to the implementation of the method, and for brevity, is not repeated herein again.

An embodiment of the present invention further provides an LPA. The LPA includes a communications module, where the communications module is configured to receive fifth information sent by a subscription management-data preparation SM-DP+ server; the communications module is further configured to send an authentication algorithm program in a bound profile package to an embedded universal integrated circuit card eUICC based on the fifth information; the communications module is further configured to receive a message sent by the eUICC to indicate completion of adding the authentication algorithm program; and the communications module is further configured to send a profile in the bound profile package to the eUICC.

In an optional implementation, the fifth information is length information of the authentication algorithm program, or the fifth information is tag information of encrypted segmented data of the bound profile package.

In an optional implementation, the length information of the authentication algorithm program is included in storage metadata of the bound profile package.

Based on the same inventive concept, a principle of the LPA for resolving problems according to this embodiment of the present invention is similar to that of the method embodiment of the present invention, and therefore, the implementation of the LPA can be learned by referring to the implementation of the method, and for brevity, is not repeated herein again.

FIG. 21 is a schematic structural diagram of a user terminal according to an embodiment of the present invention. As shown in FIG. 21, the user terminal includes a communications module 2101 and a processing module 2102.

The communications module 2101 is configured to receive a bound profile package sent by a subscription management-data preparation SM-DP+ server, where the bound profile package includes an authentication algorithm program, the authentication algorithm program corresponds to target information, and the target information is at least one of: firmware version information of an embedded universal integrated circuit card eUICC, an embedded universal integrated circuit card identifier EID issuer identifier of the eUICC, platform/operating system version information of the eUICC, or capability information of the eUICC; and the processing module 2102 is configured to add the authentication algorithm program into the eUICC.

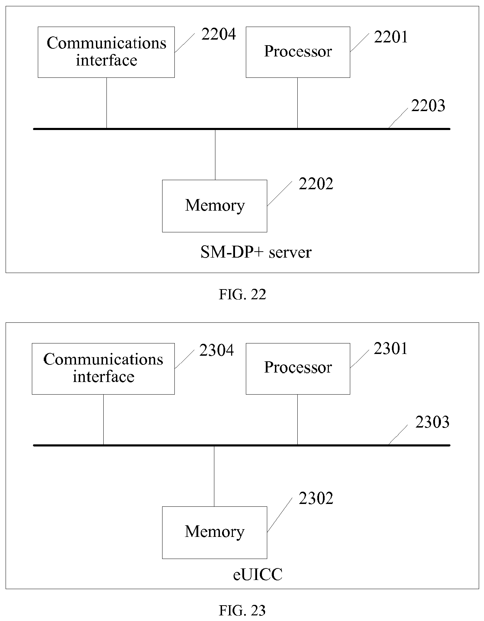

FIG. 22 is another possible schematic structural diagram of an SM-DP+ server according to an embodiment of the present invention. As shown in FIG. 22, the SM-DP+ server 2200 includes a processor 2201, a memory 2202, and a communications interface 2204. The processor 2201 is connected to the memory 2202, and the communications interface 2204 is connected to the processor 2201. Optionally, the SM-DP+ server 2200 may further include a bus system 2203. The processor 2201, the memory 2202, and the communications interface 2204 are connected through the bus system 2203.

The processor 2201 may be a central processing unit (Central Processing Unit, CPU), a general-purpose processor, a coprocessor, a digital signal processor (Digital Signal Processing, DSP), an application-specific integrated circuit (Application-Specific Integrated Circuit, ASIC), a field programmable gate array (Field Programmable Gate Array, FPGA), or another programmable logical device, a transistor logical device, a hardware component, or any combination thereof. Alternatively, the processor 2201 may be a combination of processors implementing a computing function, for example, a combination of one or more microprocessors, or a combination of the DSP and a microprocessor.

The bus system 2203 may be a peripheral component interconnect (Peripheral Component Interconnect, PCI for short) bus or an extended industry standard architecture (Extended Industry Standard Architecture, EISA for short) bus or the like. The bus system 2203 may be classified into an address bus, a data bus, a control bus, and the like. For ease of representation, only one thick line is used to represent the bus in FIG. 22, but this does not mean that there is only one bus or only one type of bus.

The communications interface 2204 is configured to implement communication with other network elements (such as LPA and MNO).

By invoking program code stored in the memory 2202, the processor 2201 can perform any one or more of steps performed by the SM-DP+ server described in the foregoing method embodiment. For example, by invoking the program code stored in the memory 2202, the processor 2201 can perform steps performed by the SM-DP+ server in FIG. 3 to FIG. 13, and FIG. 15 or FIG. 17.

Based on the same inventive concept, a principle of the SM-DP+ server for resolving problems according to this embodiment of the present invention is similar to the method embodiment of the present invention, and therefore, the implementation of the SM-DP+ server can be learned by referring to the implementation of the method, and for brevity, is not repeated herein again.

FIG. 23 is another possible schematic structural diagram of an eUICC according to an embodiment of the present invention. As shown in FIG. 23, the eUICC 2300 includes a processor 2301, a memory 2302, and a communications interface 2304. The processor 2301 is connected to the memory 2302, and the communications interface 2304 is connected to the processor 2301. Optionally, the eUICC 2300 may further include a bus system 2303. The processor 2301, the memory 2302, and the communications interface 2304 are connected through the bus system 2303.

The processor 2301 may be a central processing unit (Central Processing Unit, CPU), a general-purpose processor, a coprocessor, a digital signal processor (Digital Signal Processing, DSP), an application-specific integrated circuit (Application-Specific Integrated Circuit, ASIC), a field programmable gate array (Field Programmable Gate Array, FPGA), or another programmable logical device, a transistor logical device, a hardware component, or any combination thereof. Alternatively, the processor 2301 may be a combination of processors implementing a computing function, for example, a combination of one or more microprocessors, or a combination of the DSP and a microprocessor.

The bus system 2303 may be a peripheral component interconnect (Peripheral Component Interconnect, PCI for short) bus or an extended industry standard architecture (Extended Industry Standard Architecture, EISA for short) bus or the like. The bus system 2303 may be classified into an address bus, a data bus, a control bus, and the like. For ease of representation, only one thick line is used to represent the bus in FIG. 23, but this does not mean that there is only one bus or only one type of bus.

The communications interface 2304 is configured to implement communication with other network elements (such as LPA).

By invoking program code stored in the memory 2302, the processor 2301 can perform any one or more of steps performed by the eUICC described in the foregoing method embodiment. For example, by invoking the program code stored in the memory 2302, the processor 2301 can perform steps performed by the eUICC in FIG. 3 to FIG. 13, and FIG. 15 or FIG. 17.

Based on the same inventive concept, a principle of the eUICC for resolving problems according to this embodiment of the present invention is similar to the method embodiment of the present invention, and therefore, the implementation of the eUICC can be learned by referring to the implementation of the method, and for brevity, is not repeated herein again.

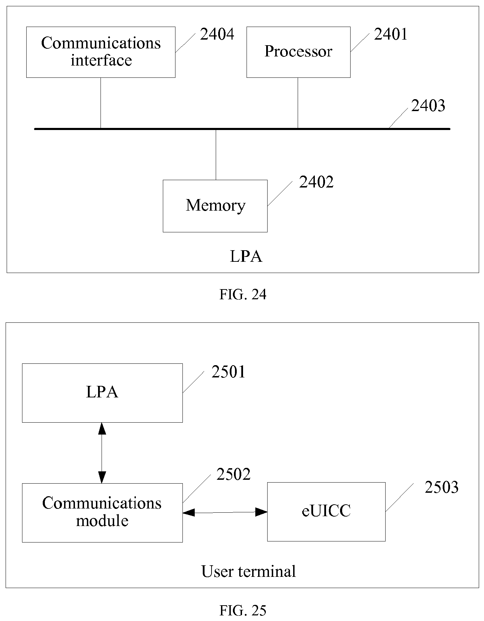

FIG. 24 is a possible schematic structural diagram of an LPA according to an embodiment of the present invention. As shown in FIG. 24, the LPA 2400 includes a processor 2401, a memory 2402, and a communications interface 2404. The processor 2401 is connected to the memory 2402, and the communications interface 2404 is connected to the processor 2401. Optionally, the LPA 2400 may further include a bus system 2403. The processor 2401, the memory 2402, and the communications interface 2404 are connected through the bus system 2403.

The processor 2401 may be a central processing unit (Central Processing Unit, CPU), a general-purpose processor, a coprocessor, a digital signal processor (Digital Signal Processing, DSP), an application-specific integrated circuit (Application-Specific Integrated Circuit, ASIC), a field programmable gate array (Field Programmable Gate Array, FPGA), or another programmable logical device, a transistor logical device, a hardware component, or any combination thereof. Alternatively, the processor 2401 may be a combination of processors implementing a computing function, for example, a combination of one or more microprocessors, or a combination of the DSP and a microprocessor.

The bus system 2403 may be a peripheral component interconnect (Peripheral Component Interconnect, PCI for short) bus or an extended industry standard architecture (Extended Industry Standard Architecture, EISA for short) bus or the like. The bus system 2403 may be classified into an address bus, a data bus, a control bus, and the like. For ease of representation, only one thick line is used to represent the bus in FIG. 24, but this does not mean that there is only one bus or only one type of bus.

The communications interface 2404 is configured to implement communication with other network elements (such as eUICC or SM-DP+ server).

By invoking program code stored in the memory 2402, the processor 2401 can perform any one or more of steps performed by the LPA described in the foregoing method embodiment. For example, by invoking the program code stored in the memory 2402, the processor 2401 can perform steps performed by the LPA in FIG. 3 to FIG. 13, and FIG. 15 or FIG. 17.

Based on the same inventive concept, a principle of the LPA for resolving problems according to this embodiment of the present invention is similar to the method embodiment of the present invention, and therefore, the implementation of the LPA can be learned by referring to the implementation of the method, and for brevity, is not repeated herein again.

FIG. 25 is a possible schematic structural diagram of a user terminal according to an embodiment of the present invention. As shown in FIG. 25, the user terminal 2500 includes an LPA 2501, a communications module 2502, and an eUICC 2503.

The LPA 2501 is configured to receive a bound profile package sent by an SM-DP+ server, where the bound profile package includes an authentication algorithm program, the authentication algorithm program corresponds to target information, and the target information is at least one of: firmware version information of the eUICC 2503, an embedded universal integrated circuit card identifier EID issuer identifier of the eUICC 2503, platform/operating system version information of the eUICC 2503, or capability information of the eUICC 2503.

The LPA 2501 is further configured to send or add the authentication algorithm program into the eUICC 2503 by using the communications module 2502.

The communications module may be a modem (Modem).

It should be noted that, in the foregoing embodiments, the description of each embodiment has respective focuses. For a part that is not described in detail in an embodiment, reference may be made to related descriptions in other embodiments.

A sequence of the steps of the method in the embodiments of the present invention may be adjusted, and the steps may also be combined or removed according to an actual requirement.

The modules of the embodiments of the present invention may be executed by a universal integrated circuit, such as a CPU (Central Processing Unit, central processing unit) or an ASIC (Application Specific Integrated Circuit, application specific integrated circuit).

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing within the scope of the invention as defined by the claims.

## Claims

1. A method for adding an authentication algorithm program, comprising:
• receiving, by an embedded universal integrated circuit card eUICC, a bound profile package sent by a local profile assistant LPA, wherein the bound profile package comprises initial secure channel information, storage metadata, an authentication algorithm program, and a profile, the authentication algorithm program corresponds to target information, and the target information is at least one of: firmware version information of the eUICC, an embedded universal integrated circuit card identifier EID issuer identifier of the eUICC, platform/operating system version information of the eUICC, or capability information of the eUICC (step 304); and
• adding, by the eUICC, the authentication algorithm program into the eUICC (step 305).

2. The method according to claim 1, wherein before the receiving, by the eUICC, the initial secure channel information sent by the LPA, the method further comprises:
receiving, by the eUICC, fourth information sent by an SM-DP+ server by using the LPA, wherein the fourth information comprises an identifier of the authentication algorithm program, length information of the authentication algorithm program, and a first digital signature;
verifying, by the eUICC, the first digital signature by using the identifier of the authentication algorithm program and the length information of the authentication algorithm program;
generating, by the eUICC, a second digital signature by using the first digital signature if the eUICC succeeds in verifying the first digital signature; and
sending, by the eUICC, the second digital signature to the SM-DP+ server by using the LPA.

3. The method according to claim 2, wherein after the eUICC receives the authentication algorithm program sent by the LPA, the method further comprises: adding, by the eUICC, the identifier of the authentication algorithm program into the eUICC.

4. The method according to claim 1, wherein the storage metadata comprises the identifier of the authentication algorithm program, and the method further comprises: adding, by the eUICC, the identifier of the authentication algorithm program into the eUICC.

5. The method according to any one of claims 1 to 4, wherein the initial secure channel information of the bound profile package comprises a remote operation type identifier whose value is install-bound-patch and ProfileType, wherein the install-bound-patch and the ProfileType are used to indicate that the bound profile package comprises the authentication algorithm program and the profile.

6. The method according to any one of claims 1 to 5, wherein the authentication algorithm program and the profile are encrypted by using a session key, and after the eUICC receives the authentication algorithm program sent by the LPA, the method further comprises:
decrypting, by the eUICC, the authentication algorithm program by using the session key; and
after the eUICC receives the profile sent by the LPA, the method further comprises:
decrypting, by the eUICC, the profile by using the session key.

7. The method according to any one of claims 1 to 5, wherein the authentication algorithm program and the profile are encrypted by using a key encrypting key, the bound profile package further comprises the key encrypting key, and the key encrypting key is encrypted by using the session key, and before the eUICC receives the authentication algorithm program sent by the LPA, the method further comprises:
receiving, by the eUICC, the key encrypting key sent by the LPA;
decrypting, by the eUICC, the key encrypting key by using the session key;
after the eUICC receives the authentication algorithm program sent by the LPA, the method further comprises:
decrypting the authentication algorithm program by using the key encrypting key; and
after the eUICC receives the profile sent by the LPA, the method further comprises:
decrypting the profile by using the key encrypting key.

8. The method according to any one of claims 1 to 5, wherein the authentication algorithm program is encrypted by using a session key, the profile is encrypted by using a key encrypting key, the bound profile package further comprises the key encrypting key, and the key encrypting key is encrypted by using the session key, and before the eUICC receives the profile sent by the LPA, the method further comprises:
receiving, by the eUICC, the key encrypting key sent by the LPA; and
decrypting, by the eUICC, the key encrypting key by using the session key;
after the eUICC receives the authentication algorithm program sent by the LPA, the method further comprises:
decrypting the authentication algorithm program by using the session key; and
after the eUICC receives the profile sent by the LPA, the method further comprises:
decrypting the profile by using the key encrypting key.

9. The method according to any one of claims 1 to 5, wherein the authentication algorithm program is encrypted by the MNO by using a public key of the eUICC, and the method further comprises:
decrypting the authentication algorithm program by using a private key of the eUICC.

10. The method according to any one of claims 1 to 9, wherein the method further comprises:
deleting, by the eUICC, the authentication algorithm program if the eUICC deletes the profile.

11. The method according to any one of claims 1 to 10, wherein after the adding, by the eUICC, the authentication algorithm program into the eUICC, the method further comprises:
receiving, by the eUICC, a profile activation command sent by the LPA, wherein the profile activation command instructs the eUICC to activate the profile;
determining, by the eUICC, a corresponding authentication algorithm program based on the identifier of the authentication algorithm program in the profile;
configuring, by the eUICC, the authentication algorithm program by using a network access application parameter of the profile; and
performing, by the eUICC, mutual authentication with a network by using the authentication algorithm program.

12. The method according to any one of claims 1 to 11, wherein the receiving, by the embedded universal integrated circuit card eUICC, the bound profile package sent by the local profile assistant LPA comprises:
receiving, by the embedded universal integrated circuit card eUICC, the initial secure channel information in the bound profile package sent by the local profile assistant LPA;
receiving, by the eUICC, the storage metadata in the bound profile package sent by the LPA;
receiving, by the eUICC, the authentication algorithm program in the bound profile package sent by the LPA;
sending, by the eUICC, a message to the LPA to indicate completion of adding the authentication algorithm program; and
receiving, by the eUICC, the profile in the bound profile package sent by the LPA.

13. An embedded universal integrated circuit card eUICC, wherein the eUICC comprises a processor (2301), a memory (2302), a communications interface (2304), and one or more programs, wherein the processor is connected to the communications interface and the memory, the one or more programs are stored in the memory, and the processor is configured to invoke the program in the memory to perform the method according to any one of claims 1 to 12.

## Patentansprüche

1. Verfahren zum Hinzufügen eines Authentifizierungsalgorithmusprogramms, das Folgendes umfasst:
• Empfangen, durch eine eingebaute universelle integrierte Schaltungskarte (embedded universal integrated circuit card - eUICC), eines gebundenen Profilpakets, das durch einen lokalen Profil-Assistenten (local profile assistant - LPA) gesendet wird, wobei das gebundene Profilpaket erste sichere Kanalinformationen, Speicher-Metadaten, ein Authentifizierungsalgorithmusprogramm und ein Profil umfasst, wobei das Authentifizierungsalgorithmusprogramm Zielinformationen entspricht und wobei die Zielinformationen mindestens eines der Folgenden sind: Firmware-Versionsinformationen der eUICC, einen Identifikator der eingebauten universellen integrierten Schaltungskarte (EID) Herausgeberidentifikator der eUICC, Plattform-/Betriebssystem-Versionsinformationen der eUICC oder Fähigkeitsinformationen der eUICC (Schritt 304); und
• Hinzufügen, durch die eUICC, des Authentifizierungsalgorithmusprogramms in die eUICC (Schritt 305) .

2. Verfahren nach Anspruch 1, wobei, vor dem Empfangen, durch die eUICC, der ersten sicheren Kanalinformationen, die durch den LPA gesendet werden, das Verfahren ferner Folgendes umfasst:
Empfangen, durch die eUICC, von vierten Informationen, die durch einen SM-DP+-Server unter Verwendung des LPAs gesendet werden, wobei die vierten Informationen einen Identifikator des Authentifizierungsalgorithmusprogramms, Längeninformationen des Authentifizierungsalgorithmusprogramms und eine erste digitale Signatur umfassen;
Verifizieren, durch die eUICC, der ersten digitalen Signatur unter Verwendung des Identifikators des Authentifizierungsalgorithmusprogramms und der Längeninformationen des Authentifizierungsalgorithmusprogramms;
Erzeugen, durch die eUICC, einer zweiten digitalen Signatur unter Verwendung der ersten digitalen Signatur, falls es der eUICC gelingt, die erste digitale Signatur zu verifizieren; und
Senden, durch die eUICC, der zweiten digitalen Signatur an den SM-DP+-Server unter Verwendung des LPAs.

3. Verfahren nach Anspruch 2, wobei, nachdem die eUICC das Authentifizierungsalgorithmusprogramm empfängt, das durch den LPA gesendet wird, das Verfahren ferner Folgendes umfasst:
Hinzufügen, durch die eUICC, des Identifikators des Authentifizierungsalgorithmusprogramms in die eUICC.

4. Verfahren nach Anspruch 1, wobei die Speicher-Metadaten den Identifikator des Authentifizierungsalgorithmusprogramms umfassen und wobei das Verfahren ferner ein Hinzufügen, durch die eUICC, des Identifikators des Authentifizierungsalgorithmusprogramms in die eUICC umfasst.

5. Verfahren nach einem der Ansprüche 1 bis 4, wobei die ersten sicheren Kanalinformationen des gebundenen Profilpakets einen Fernbetriebstypidentifikator umfassen, dessen Wert ein Installieren-Gebunden-Patch und ein ProfilTyp ist, wobei das Installieren-Gebunden-Patch und der ProfilTyp verwendet werden, um anzugeben, dass das gebundene Profilpaket das Authentifizierungsalgorithmusprogramm und das Profil umfasst.

6. Verfahren nach einem der Ansprüche 1 bis 5, wobei das Authentifizierungsalgorithmusprogramm und das Profil unter Verwendung eines Sitzungsschlüssels verschlüsselt sind und wobei, nachdem die eUICC das Authentifizierungsalgorithmusprogramm empfängt, das durch den LPA gesendet wird, das Verfahren ferner Folgendes umfasst:
Entschlüsseln, durch die eUICC, des Authentifizierungsalgorithmusprogramms unter Verwendung des Sitzungsschlüssels; und
wobei, nachdem die eUICC das Profil empfängt, das durch den LPA gesendet wird, das Verfahren ferner Folgendes umfasst:
Entschlüsseln, durch die eUICC, des Profils unter Verwendung des Sitzungsschlüssels.

7. Verfahren nach einem der Ansprüche 1 bis 5, wobei das Authentifizierungsalgorithmusprogramm und das Profil unter Verwendung eines Schlüsselverschlüsselungsschlüssels verschlüsselt werden, wobei das gebundene Profilpaket ferner den Schlüsselverschlüsselungsschlüssel umfasst und der Schlüsselverschlüsselungsschlüssel unter Verwendung des Sitzungsschlüssels verschlüsselt wird und wobei, bevor die eUICC das Authentifizierungsalgorithmusprogramm empfängt, das durch den LPA gesendet wird, das Verfahren ferner Folgendes umfasst:
Empfangen, durch die eUICC, des Schlüsselverschlüsselungsschlüssels, der durch den LPA gesendet wird;
Entschlüsseln, durch die eUICC, des Schlüsselverschlüsselungsschlüssels unter Verwendung des Sitzungsschlüssels;
wobei, nachdem die eUICC das Authentifizierungsalgorithmusprogramm empfängt, das durch den LPA gesendet wird, das Verfahren ferner Folgendes umfasst:
Entschlüsseln des Authentifizierungsalgorithmusprogramms unter Verwendung des Schlüsselverschlüsselungsschlüssels;
und wobei, nachdem die eUICC das Profil empfängt, das durch den LPA gesendet wird, das Verfahren ferner Folgendes umfasst:
Entschlüsseln des Profils unter Verwendung des Schlüsselverschlüsselungsschlüssels.

8. Verfahren nach einem der Ansprüche 1 bis 5, wobei das Authentifizierungsalgorithmusprogramm unter Verwendung eines Sitzungsschlüssels verschlüsselt wird, wobei das Profil unter Verwendung eines Schlüsselverschlüsselungsschlüssels verschlüsselt wird, wobei das gebundene Profilpaket ferner den Schlüsselverschlüsselungsschlüssel umfasst und der Schlüsselverschlüsselungsschlüssel unter Verwendung des Sitzungsschlüssels verschlüsselt wird und wobei, bevor die eUICC das Profil empfängt, das durch den LPA gesendet wird, das Verfahren ferner Folgendes umfasst:
Empfangen, durch die eUICC, des Schlüsselverschlüsselungsschlüssels, der durch den LPA gesendet wird; und
Entschlüsseln, durch die eUICC, des Schlüsselverschlüsselungsschlüssels unter Verwendung des Sitzungsschlüssels;
wobei, nachdem die eUICC das Authentifizierungsalgorithmusprogramm empfängt, das durch den LPA gesendet wird, das Verfahren ferner Folgendes umfasst:
Entschlüsseln des Authentifizierungsalgorithmusprogramms unter Verwendung des Sitzungsschlüssels; und
wobei, nachdem die eUICC das Profil empfängt, das durch den LPA gesendet wird, das Verfahren ferner Folgendes umfasst:
Entschlüsseln des Profils unter Verwendung des Schlüsselverschlüsselungsschlüssels.

9. Verfahren nach einem der Ansprüche 1 bis 5, wobei das Authentifizierungsalgorithmusprogramm von dem Mobilfunknetzbetreiber (mobile network operator - MNO) unter Verwendung eines öffentlichen Schlüssels der eUICC verschlüsselt wird und wobei das Verfahren ferner Folgendes umfasst:
Entschlüsseln des Authentifizierungsalgorithmusprogramms unter Verwendung eines privaten Schlüssels der eUICC.

10. Verfahren nach einem der Ansprüche 1 bis 9, wobei das Verfahren ferner Folgendes umfasst:
Löschen, durch die eUICC, des Authentifizierungsalgorithmusprogramms, falls die eUICC das Profil löscht.

11. Verfahren nach einem der Ansprüche 1 bis 10, wobei, nach dem Hinzufügen, durch die eUICC, des Authentifizierungsalgorithmusprogramms in die eUICC, das Verfahren ferner Folgendes umfasst:
Empfangen, durch die eUICC, eines Profilaktivierungsbefehls, der durch den LPA gesendet wird, wobei der Profilaktivierungsbefehl die eUICC anweist, das Profil zu aktivieren;
Bestimmen, durch die eUICC, eines entsprechenden Authentifizierungsalgorithmusprogramms basierend auf dem Identifikator des Authentifizierungsalgorithmusprogramms in dem Profil;
Konfigurieren, durch die eUICC, des Authentifizierungsalgorithmusprogramms unter Verwendung eines Netzwerkzugriffs-Anwendungsparameters des Profils; und
Durchführen, durch die eUICC, einer gegenseitigen Authentifizierung mit einem Netzwerk unter Verwendung des Authentifizierungsalgorithmusprogramms.

12. Verfahren nach einem der Ansprüche 1 bis 11, wobei das Empfangen, durch die eingebaute universelle integrierte Schaltungskarte (eUICC), des gebundenen Profilpakets, das durch den lokalen Profil-Assistenten (LPA) gesendet wird, Folgendes umfasst:
Empfangen, durch die eingebaute universelle integrierte Schaltungskarte (eUICC), der ersten sicheren Kanalinformationen in dem gebundenen Profilpaket, das durch den lokalen Profil-Assistenten (LPA) gesendet wird;
Empfangen, durch die eUICC, der Speicher-Metadaten in dem gebundenen Profilpaket, das durch den LPA gesendet wird;
Empfangen, durch die eUICC, des Authentifizierungsalgorithmusprogramms in dem gebundenen Profilpaket, das durch den LPA gesendet wird;
Senden, durch die eUICC, einer Nachricht an den LPA, um einen Abschluss des Hinzufügens des Authentifizierungsalgorithmusprogramms anzugeben; und
Empfangen, durch die eUICC, des Profils in dem gebundenen Profilpaket, das durch den LPA gesendet wird.

13. Eingebaute universelle integrierte Schaltungskarte (eUICC), wobei die eUICC einen Prozessor (2301), einen Speicher (2302), eine Kommunikationsschnittstelle (2304) und eines oder mehrere Programme umfasst, wobei der Prozessor an die Kommunikationsschnittstelle und den Speicher angeschlossen ist, wobei das eine oder mehrere Programme in dem Speicher gespeichert werden und wobei der Prozessor dazu konfiguriert ist, das Programm in dem Speicher aufzurufen, um das Verfahren nach einem der Ansprüche 1 bis 12 durchzuführen.

## Revendications

1. Procédé pour ajouter un programme d'algorithme d'authentification, comprenant :
• la réception, par une carte de circuit intégré universelle incorporée, eUICC, d'un paquetage de profil lié envoyé par un assistant de profil local, LPA, dans lequel le paquetage de profil lié comprend des informations de canal sécurisé initiales, des métadonnées de stockage, un programme d'algorithme d'authentification, et un profil, le programme d'algorithme d'authentification correspond à des informations cibles, et les informations cibles sont au moins l'une parmi : des informations de version de micrologiciel de l'eUICC, un identifiant d'émetteur EID d'identifiant de carte de circuit intégré universelle incorporée de l'eUICC, des informations de version de système d'exploitation/plateforme de l'eUICC, ou des informations de capacité de l'eUICC (étape 304) ; et
• l'ajout, par l'eUICC, du programme d'algorithme d'authentification dans l'eUICC (étape 305).

2. Procédé selon la revendication 1, dans lequel avant la réception, par l'eUICC, des informations de canal sécurisé initiales envoyées par le LPA, le procédé comprend en outre :
la réception, par l'eUICC, de quatrièmes informations envoyées par un serveur SM-DP+ en utilisant le LPA, dans lequel les quatrièmes informations comprennent un identifiant du programme d'algorithme d'authentification, des informations de longueur du programme d'algorithme d'authentification, et une première signature numérique ;
la vérification, par l'eUICC, de la première signature numérique en utilisant l'identifiant du programme d'algorithme d'authentification et les informations de longueur du programme d'algorithme d'authentification ;
la génération, par l'eUICC, d'une seconde signature numérique en utilisant la première signature numérique si l'eUICC réussit à vérifier la première signature numérique ; et
l'envoi, par l'eUICC, de la seconde signature numérique au serveur SM-DP+ en utilisant le LPA.

3. Procédé selon la revendication 2, dans lequel, après que l'eUICC reçoit le programme d'algorithme d'authentification envoyé par le LPA, le procédé comprend en outre :
l'ajout, par l'eUICC, de l'identifiant du programme d'algorithme d'authentification dans l'eUICC.

4. Procédé selon la revendication 1, dans lequel les métadonnées de stockage comprennent l'identifiant du programme d'algorithme d'authentification, et le procédé comprend en outre :
l'ajout, par l'eUICC, de l'identifiant du programme d'algorithme d'authentification dans l'eUICC.

5. Procédé selon l'une quelconque des revendications 1 à 4, dans lequel les informations de canal sécurisé initiales du paquetage de profil lié comprennent un identifiant de type d'opération à distance dont la valeur est un correctif lié d'installation et un type de profil, dans lequel le correctif lié d'installation et le type de profil sont utilisés pour indiquer que le paquetage de profil lié comprend le programme d'algorithme d'authentification et le profil.

6. Procédé selon l'une quelconque des revendications 1 à 5, dans lequel le programme d'algorithme d'authentification et le profil sont chiffrés en utilisant une clé de session, et après que l'eUICC reçoit le programme d'algorithme d'authentification envoyé par le LPA, le procédé comprend en outre :
le déchiffrement, par l'eUICC, du programme d'algorithme d'authentification en utilisant la clé de session ; et
après que l'eUICC reçoit le profil envoyé par le LPA, le procédé comprend en outre :
le déchiffrement, par l'eUICC, du profil en utilisant la clé de session.

7. Procédé selon l'une quelconque des revendications 1 à 5, dans lequel le programme d'algorithme d'authentification et le profil sont chiffrés en utilisant une clé de chiffrement de clé, le paquetage de profil lié comprend en outre la clé de chiffrement de clé, et la clé de chiffrement de clé est chiffrée en utilisant la clé de session, et avant que l'eUICC reçoive le programme d'algorithme d'authentification envoyé par le LPA, le procédé comprend en outre :
la réception, par l'eUICC, de la clé de chiffrement de clé envoyée par le LPA ;
le déchiffrement, par l'eUICC, de la clé de chiffrement de clé en utilisant la clé de session ;
après que l'eUICC reçoit le programme d'algorithme d'authentification envoyé par le LPA, le procédé comprend en outre :
le déchiffrement du programme d'algorithme d'authentification en utilisant la clé de chiffrement de clé ; et
après que l'eUICC reçoit le profil envoyé par le LPA, le procédé comprend en outre :
le déchiffrement du profil en utilisant la clé de chiffrement de clé.

8. Procédé selon l'une quelconque des revendications 1 à 5, dans lequel le programme d'algorithme d'authentification est chiffré en utilisant une clé de session, le profil est chiffré en utilisant une clé de chiffrement de clé, le paquetage de profil lié comprend en outre la clé de chiffrement de clé, et la clé de chiffrement de clé est chiffrée en utilisant la clé de session, et avant que l'eUICC reçoive le profil envoyé par le LPA, le procédé comprend en outre :
la réception, par l'eUICC, de la clé de chiffrement de clé envoyée par le LPA ; et
le déchiffrement, par l'eUICC, de la clé de chiffrement de clé en utilisant la clé de session ;
après que l'eUICC reçoit le programme d'algorithme d'authentification envoyé par le LPA, le procédé comprend en outre :
le déchiffrement du programme d'algorithme d'authentification en utilisant la clé de session ; et
après que l'eUICC reçoit le profil envoyé par le LPA, le procédé comprend en outre :
le déchiffrement du profil en utilisant la clé de chiffrement de clé.

9. Procédé selon l'une quelconque des revendications 1 à 5, dans lequel le programme d'algorithme d'authentification est chiffré par le MNO en utilisant une clé publique de l'eUICC, et le procédé comprend en outre :
le déchiffrement du programme d'algorithme d'authentification en utilisant une clé privée de l'eUICC.

10. Procédé selon l'une quelconque des revendications 1 à 9, dans lequel le procédé comprend en outre :
la suppression, par l'eUICC, du programme d'algorithme d'authentification si l'eUICC supprime le profil.

11. Procédé selon l'une quelconque des revendications 1 à 10, dans lequel après l'ajout, par l'eUICC, du programme d'algorithme d'authentification dans l'eUICC, le procédé comprend en outre :
la réception, par l'eUICC, d'un ordre d'activation de profil envoyé par le LPA, dans lequel l'ordre d'activation de profil donne l'instruction à l'eUICC d'activer le profil ;
la détermination, par l'eUICC, d'un programme d'algorithme d'authentification correspondant d'après l'identifiant du programme d'algorithme d'authentification dans le profil ;
la configuration, par l'eUICC, du programme d'algorithme d'authentification en utilisant un paramètre d'application d'accès au réseau du profil ; et
la réalisation, par l'eUICC, d'une authentification mutuelle avec un réseau en utilisant le programme d'algorithme d'authentification.

12. Procédé selon l'une quelconque des revendications 1 à 11, dans lequel la réception, par la carte de circuit intégré universelle incorporée, eUICC, du paquetage de profil lié envoyé par l'assistant de profil local, LPA, comprend :
la réception, par la carte de circuit intégré universelle incorporée, eUICC, des informations de canal sécurisé initiales dans le paquetage de profil lié envoyé par l'assistant de profil local, LPA ;
la réception, par l'eUICC, des métadonnées de stockage dans le paquetage de profil lié envoyé par le LPA ;
la réception, par l'eUICC, du programme d'algorithme d'authentification dans le paquetage de profil lié envoyé par le LPA ;
l'envoi, par l'eUICC, d'un message au LPA pour indiquer un achèvement de l'ajout du programme d'algorithme d'authentification ; et
la réception, par l'eUICC, du profil dans le paquetage de profil lié envoyé par le LPA.

13. Carte de circuit intégré universelle incorporée, eUICC, l'eUICC comprenant un processeur (2301), une mémoire (2302), une interface de communication (2304), et un ou plusieurs programmes, dans laquelle le processeur est connecté à l'interface de communication et à la mémoire, les un ou plusieurs programmes sont stockés dans la mémoire, et le processeur est conçu pour appeler le programme dans la mémoire pour réaliser le procédé selon l'une quelconque des revendications 1 à 12.
